# EUROPÄISCHE PATENTSCHRIFT

(11) **EP 0 972 607 B1**
(45) Veröffentlichungstag und Bekanntmachung des Hinweises auf die Patenterteilung: **15.06.2005**
(21) Anmeldenummer: 99119265.9
(22) Anmeldetag: 25.10.1996
(51) Int. Cl.: B23P 19/06, F16B 7/18, F16B 37/14, F02M 55/02

(54) **Verbindungsanordnung**
Connection arrangement
Agencement de connexion

(30) Priorität: 07.12.1995 DE 19545610
(43) Veröffentlichungstag der Anmeldung: 19.01.2000
(62) Teilanmeldung aus: 96937232.5
(73) Patentinhaber: DaimlerChrysler AG, 70567 Stuttgart (DE)
(72) Erfinder: Werner, Johannes, 22359 Hamburg (DE)

(56) Entgegenhaltungen:
- US-A- 4 745 892
- US-A- 4 784 554
- US-A- 5 248 232
- PATENT ABSTRACTS OF JAPAN vol. 011, no. 318 (M-632), 16. Oktober 1987 (1987-10-16) & JP 62 101879 A (SANSHIN IND CO LTD), 12. Mai 1987 (1987-05-12)
- PATENT ABSTRACTS OF JAPAN vol. 016, no. 569 (M-1343), 9. Dezember 1992 (1992-12-09) & JP 04 219510 A (NISUKO KK), 10. August 1992 (1992-08-10)

## Beschreibung

Die Erfindung betrifft eine Verbindungsanordnung gemäß dem Oberbegriff des Anspruchs 1 und wie aus US-A-5248232 bekannt ist.

Aus der Druckschrift ist US-A-5 248 232 ist eine Verbindungsanordnung bekannt, bei der eine Schraube mit einem Außengewinde in zwei Bauteile eingeschraubt wird. Auf das aus den verschraubten Bauteilen auf der dem Schraubenkopf gegenüberliegenden Seite aus den Bauteilen auskragende Ende der Schraube wird eine Mutter mit einem Innengewinde aufgeschraubt. Die Mutter verfügt über ein weiteres Gewinde, nämlich ein Außengewinde, welches gleichgängig und mit gleicher Steigung wie das Innengewinde ausgebildet ist. Auf das Außengewinde der aus der Mutter auskragenden Schraube und auf das Außengewinde der Mutter wird eine Überwurfmutter aufgeschraubt, deren erstes (Innen-)Gewinde dem Außengewinde der Schraube entspricht und deren zweites (Innen-)Gewinde dem Außengewinde der Mutter entspricht. Erstes und zweites Gewinde sind mit fluchtenden Längsachsen hintereinanderliegend angeordnet und verfügen über unterschiedliche Durchmesser. Zur Sicherung der Verbindungseinrichtung wird die Überwurfmutter mit der Mutter und der Schraube verspannt.

Nachteilig ist die Zahl und der Aufwand der miteinander zu montierenden Bauteile. In aufeinanderfolgenden Arbeitsschritten muß zunächst die Mutter zur unmittelbaren Verbindung der Bauteile mit der Schraube verschraubt werden und dann die Überwurfmutter zur Sicherung der Verbindung appliziert werden. Ein weiteres Problem ist die Aufbringung hoher Betätigungsmomente zur Gewährleistung einer großen Anpreßkraft der Bauteile. Das Betätigungsmoment hängt ab von der Gewindesteigung. Ein kleines Betätigungsmomente gewährleistendes Gewinde mit kleiner Steigung ist aufwendig und teuer zu fertigen. Ein weiteres Problem ist die Reibung zwischen dem Schraubenkopf und dem Bauteil. Diese bedingt einer Erhöhung des Betätigungsmomentes über das notwendige Anzugsmoment hinaus. Infolge der Sensitivität der Schraubenkopfreibung beispielsweise von Oberflächenparametern oder deren Grad an Verunreinigungen oder Schmierzustand kommt es weiterhin bei vorgegebenem Betätigungsmoment zu einer Verfälschung des Anzugsmomentes.

Der Erfindung liegt die Aufgabe zugrunde, eine einfach, insbesondere automatisiert, montierbare Verbindungsanordnung anzugeben, die eine sichere Verbindung der zu verbindenden Bauteile gewährleistet.

Diese Aufgabe wird erfindungsgemäß durch eine Verbindungsanordnung gemäß der Merkmale des Anspruchs 1 gelöst. Zur Verbindung der beiden Bauteile dient ein Bauteil, nämlich die Überwurfmutter. Diese kann zunächst mit einem Bauteil verschraubt werden. Anschließend wird die Überwurfmutter im Bereich des noch freien (zweiten) Gewindes in Eingriff mit einem korrespondierend ausgebildeten Gewinde des anderen Bauteiles gebracht. Durch die unterschiedlichen Gewindesteigungen kommt es bei einer Verdrehung der Überwurfmutter zu einer Relativbewegung der beiden Bauteile. In einer Endlage kommt ein Bauteil im Bereich einer Stirnfläche zur Anlage an das zweite Bauteil. Bei Applikation eines Betätigungsmomentes kommt es infolge einer Verspannung der beiden Bauteile zu einer Selbstsicherung der Verbindungsanordnung. Eine Schraubenkopfreibung tritt bei der erfindungsgemäßen Verbindungsanordnung nicht auf. Die Größe des Anzugsmomentes und die Empfindlichkeit des Einstellvorganges kann gezielt durch die Differenz der beiden Gewindesteigungen an den jeweiligen Anwendungsfall angepaßt werden.

Weitere Vorteile und zweckmäßige Ausgestaltungen sind den weiteren Ansprüchen, der nachfolgenden Beschreibung und den Zeichnungen zu entnehmen, wobei die Figuren 1a - 8f alternative Ausführungsformen zeigen, die nicht unter den Schutzbereich fallen. Es zeigen:
- Fig. 1a - 1e: die Montage eines Zylinderkopfes auf ein Kurbelgehäuse in verschiedenen Verfahrensschritten,
- Fig. 2a - 2c: verschiedene Ausführungen von Stiftschrauben mit jeweils zwei gleichgängigen Gewindeabschnitten,
- Fig. 3a - 3r: verschiedene Schraubenkopf-Ausführungen,
- Fig. 4a, 4b: die Dimensionen einer Stiftschraube in bezug auf die zu verbindenden Bauteile,
- Fig. 5a - 5d: die Montage eines Kurbelwellenlagerdeckels auf ein Kurbelwellengehäuse,
- Fig. 6a, 6b: die Montage eines Lagerdeckels auf eine Pleuelstange,
- Fig. 7a, 7b: die Montage eines Schwungrades und mehrerer Gegengewichte auf eine Kurbelwelle,
- Fig. 8a - 8f: verschiedene Verfahren zum Einbringen von Gewinden in vorgebohrte Bauteile,
- Fig. 9a - 9d: das Verschrauben von zwei Bauteilen mit einer Überwurfmutter mit zwei gleichgängigen Innengewinden,
- Fig. 10a, 10b: das Verfahren gemäß Fig. 9 am Beispiel einer Einspritzleitung,
- Fig. 11a - 11d: das Verschrauben von zwei Bauteilen mit einer Überwurfmutter in einer anderen Ausführung,
- Fig. 12a, 12b: das Verfahren gemäß Fig. 11 am Beispiel einer Einspritzleitung.

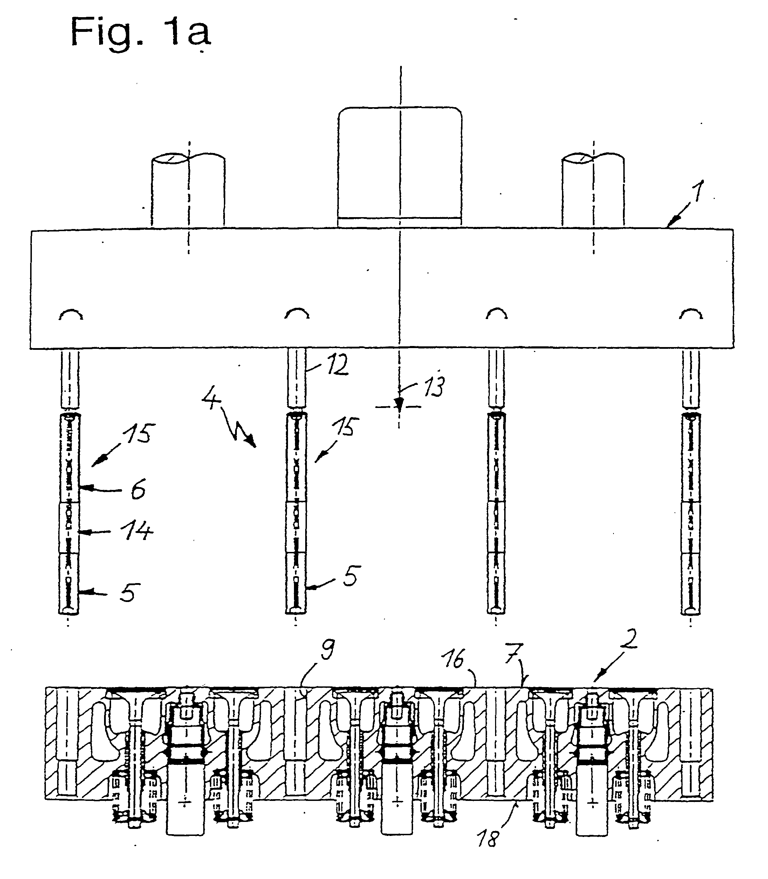

Die nachfolgend beschriebenen alternativen Ausführungsformen gemäß den Fig. 1a - 8f fallen nicht unter den Schutzbereich und werden nicht von der vorliegenden Erfindung abgedeckt.

In den Fig. 1a - 1d ist in Seitenansicht die Montage eines Zylinderkopfes auf ein Kurbelgehäuse in verschiedenen Verfahrensschritten gezeigt; Fig. le zeigt eine Draufsicht auf den fertig montierten Zylinderkopf. Bei der Vormontage gemäß Fig. 1a werden zunächst die als Stiftschrauben 15 ausgebildeten Verbindungselemente 4 von den Montagewerkzeugen 12 eines Montageautomaten 1 aufgenommen und in Gewindebohrungen 9 eines ersten Bauteiles 2 - dem Zylinderkopf 16 - in Richtung des Pfeiles 13 eingeschraubt, wobei die Oberfläche 7 (Zylinderkopfboden mit den einzelnen Brennraumabschnitten) des Zylinderkopfes 16 dem Montageautomaten zugewandt liegt. Die Stiftschrauben 15 weisen zwei Gewindeabschnitte 5, 6 auf, die sich an gegenüberliegenden axialen Stirnbereichen der Stiftschrauben erstrecken. Die beiden Gewindeabschnitte 5, 6 sind durch einen gewindefreien Schraubenschaft 14 getrennt.

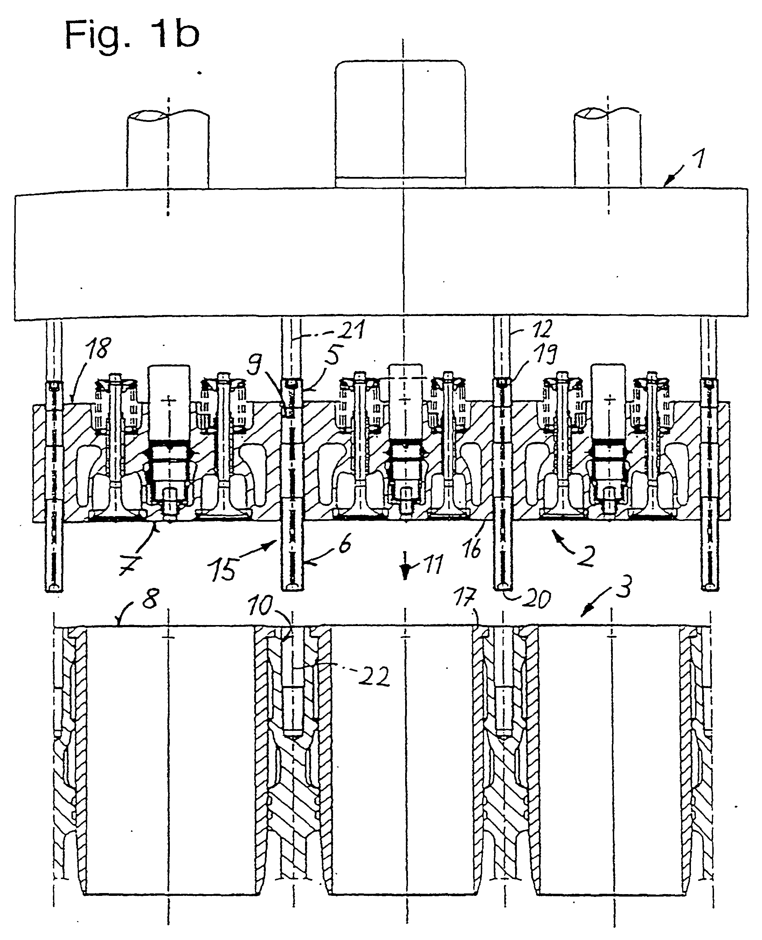

Zur Vormontage werden die Stiftschrauben 15 in die Gewindebohrungen 9 des Zylinderkopfes 16 eingeschraubt, wobei der erste Gewindeabschnitt 5 der Stiftschrauben in das Gewinde der Gewindebohrungen 9 greift. Die Stiftschrauben 15 werden gemäß Fig. 1b bei der Vormontage so weit in den Zylinderkopf 16 eingeschraubt, daß die Stiftschrauben über die Oberfläche 18 (Steuerseite) der anderen Seite des Zylinderkopfes 16 herausragen. Die Stiftschrauben 15 sind dadurch unverlierbar am Zylinderkopf 16 gehalten; nach Beendigung der Vormontage kann die in den Fig. 1b -1d gezeigte Fertigmontage erfolgen.

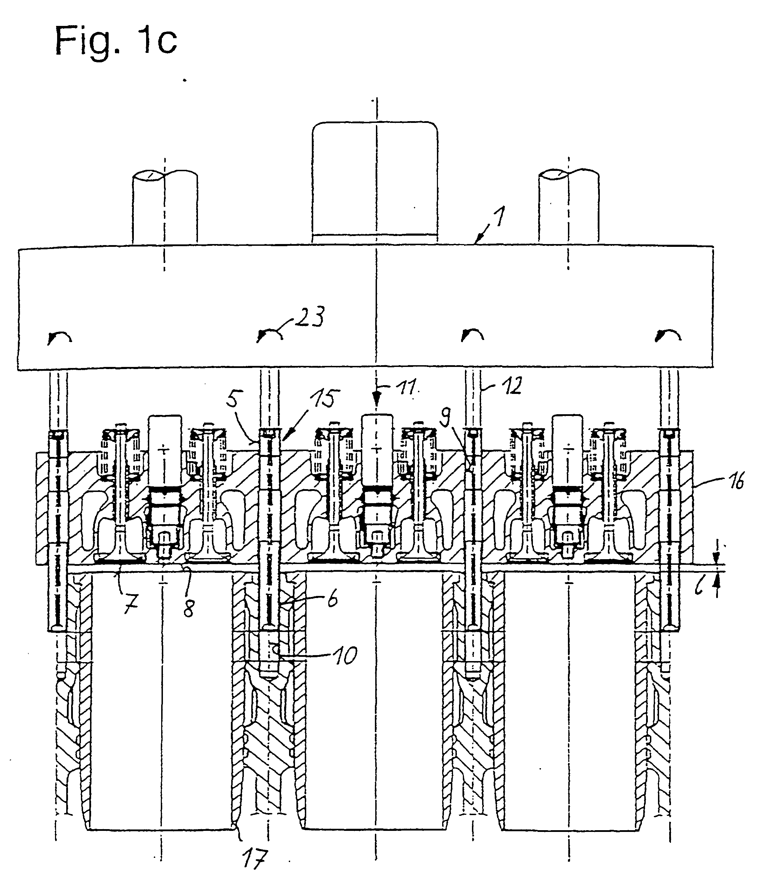

Gemäß Fig. 1b greift der Montageautomat 1 an der entgegengesetzten Seite an den Stiftschrauben 15 an, nachdem der Zylinderkopf 16 mitsamt den Stiftschrauben 15 um 180° gedreht und in die zur Fertigmontage geeignete Lage gebracht worden ist, in der nunmehr die Oberfläche 18 des Zylinderkopfes 16 dem Montageautomaten zugewandt liegt. Die Stiftschrauben 15 sind hierfür an beiden Seiten mit Schraubenköpfen 19, 20 versehen, in die die Montagewerkzeuge 12 des Montageautomaten 1 eingreifen können und durch die ein richtungsorientierter Gewindebeginn in Bezug auf die Schraubenköpfe möglich ist. Es kann daher, ohne die Position des Montageautomaten zu ändern, ein Wechsel der Verschraubungsrichtung von Pfeilrichtung 13 während der Vormontage gemäß Fig. 1a zu Pfeilrichtung 11 gemäß Fig. 1b, 1c für die Fertigmontage erfolgen, wobei der Wechsel der Verschraubungsrichtung relativ zum Bauteil 2 (dem Zylinderkopf) erfolgt. Nach Beendigung der Vormontage liegen die Längsachsen 21 der in den Gewindebohrungen 9 vormontierten Stiftschrauben 15 in einer Flucht mit den Längsachsen 22 der Gewindebohrungen 10 des zu verschraubenden zweiten Bauteiles 3, nämlich dem Kurbelgehäuse 17. Der Zylinderkopf 16 mit den Stiftschrauben 15 wird so weit in Montagerichtung 11 verschoben, bis der zweite Gewindeabschnitt 6 der Stiftschrauben 15 in die Gewindebohrungen 10 des Kurbelgehäuses 17 eingreifen. Die Gewindebohrungen 10, die als Sacklochbohrungen ausgeführt sind, sind nur in ihrem dem Bohrgrund benachbarten Abschnitt mit einem Gewinde versehen, so daß der zweite Gewindeabschnitt 6 der Stiftschrauben 15 weit in die Gewindebohrungen 10 einragt, bis die jeweiligen Gewinde zu greifen beginnen.

Gemäß Fig. 1c wird der Zylinderkopf 16 mit den vormontierten Stiftschrauben 15 so weit in Richtung des Pfeiles 11 dem Kurbelgehäuse 17 angenähert, bis das Gewinde des zweiten Gewindeabschnittes 6 der Stiftschrauben 15 gerade in das Gewinde der Gewindebohrung 10 des Kurbelgehäuses 17 zu greifen beginnt; die einander zugewandten Oberflächen 7 und 8 des Zylinderkopfes 16 bzw. des Kurbelgehäuses 17 weisen in dieser Position einen geringen Abstand 1 auf.

Die in die Schraubenköpfe der Stiftschrauben 15 eingreifenden Montagewerkzeuge 12 des Montageautomaten 1 beginnen nun, sich in Drehrichtung 23 zu drehen, so daß der zweite Gewindeabschnitt 6 der Stiftschrauben 15 in das Gewinde der Gewindebohrungen 10 des Kurbelgehäuses 17 eingedreht wird. Das Differenzgewinde der Stiftschrauben 15 bewirkt, daß sich der Zylinderkopf 16 dem Kurbelgehäuse 17 annähert. Die Gewindebohrung 10 und der entsprechende zweite Gewindeabschnitt 6 der Stiftschraube 15 sind mit einem gröberen Gewinde mit größerer Steigung versehen als der erste Gewindeabschnitt 5 der Stiftschraube 15 bzw. das entsprechende Gewinde der Gewindebohrung 9 im Zylinderkopf 16. Bei jeder Umdrehung der Stiftschraube 15 wird der Gewindeabschnitt 6 tiefer in das Gewinde des Kurbelgehäuses 17 eingedreht als sich der Gewindeabschnitt 5 durch das entsprechende Gewinde des Zylinderkopfes 16 bewegt; die Differenz der Steigungen der beiden Gewindeabschnitte 5, 6 entspricht der axialen Stellgröße bzw. Annäherung des Zylinderkopfes an das Kurbelgehäuse pro Schraubenumdrehung. Der Abstand 1 zwischen den Bauteilen wird mit jeder Schraubenumdrehung stetig verringert, bis die Bauteile nach n Umdrehungen direkt aneinanderliegen, so daß sich die Oberflächen 7, 8 berühren.

Das Annähern der beiden Bauteile, das zweckmäßig bis zum Kontakt der einander zugewandten Oberflächen erfolgt, wird im ersten Montageschritt als Voranziehen mit Hilfe des drehwinkelgesteuerten Anziehverfahrens bewirkt. Die Montagewerkzeuge 12 werden hierbei um ein bestimmtes, vorab einzustellendes Winkelmaß verdreht. Da hierbei keine permanente Überwachung des Anzugsmomentes erfolgen muß, kann das Voranziehen im ersten Montageschritt mit hoher Drehwinkel-Geschwindigkeit erfolgen.

Im darauf folgenden zweiten Montageschritt werden die Stiftschrauben 15 bis zum Erreichen eines vorgegebenen Drehmoment-Endwertes vom Montagewerkzeug 1 eingedreht. Der zweite Montageschritt kann mit den gleichen Montagewerkzeugen 12 oder auch nach einem Wechsel des Montagewerkzeuges mit einem weiteren, mit einer Drehmomentüberwachung ausgestatteten Vorrichtung angezogen werden. Auch bei einem Wechsel können die Montagewerkzeuge ohne Probleme in die Schraubenköpfe der Stiftschrauben 15 eingesetzt werden, da die Winkellage der Schraubenköpfe nach Beendigung des ersten Montageschrittes bekannt ist und sich alle Schraubenköpfe zweckmäßig in der gleichen Winkellage befinden. Von dieser Winkellage ausgehend wird nunmehr jede Stiftschraube 15 bis zum Erreichen des Drehmoment-Endwertes eingeschraubt, wobei sich nach Beendigung des Schraubvorganges jede Stiftschraube in einer anderen Winkellage befinden kann. Die Vorgabe eines Drehmoment-Endwertes gewährleistet, daß die Stiftschrauben nicht über ein zulässiges Maß hinaus in das Kurbelgehäuse hineingeschraubt werden.

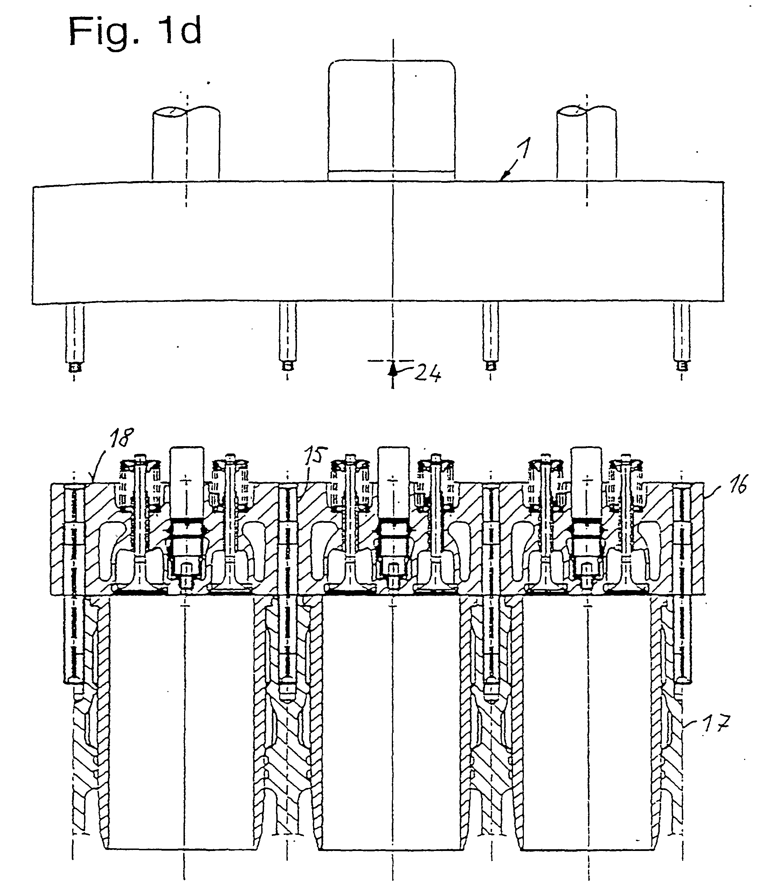

Nach Beendigung des Schraubvorganges sind die Bauteile 16, 17 fest miteinander verschraubt und der Montageautomat 1 wird in Richtung des Pfeiles 24 vom Zylinderkopf 16 entfernt, Fig. 1d. Vorteilhaft sind nach Beendigung des Schraubvorganges die Stiftschrauben 15 vollständig in den Zylinderkopf 16 eingeschraubt, so daß die axiale Stirnseite der Stiftschrauben 15 nicht über die Oberfläche 18 des Zylinderkopfes herausragt.

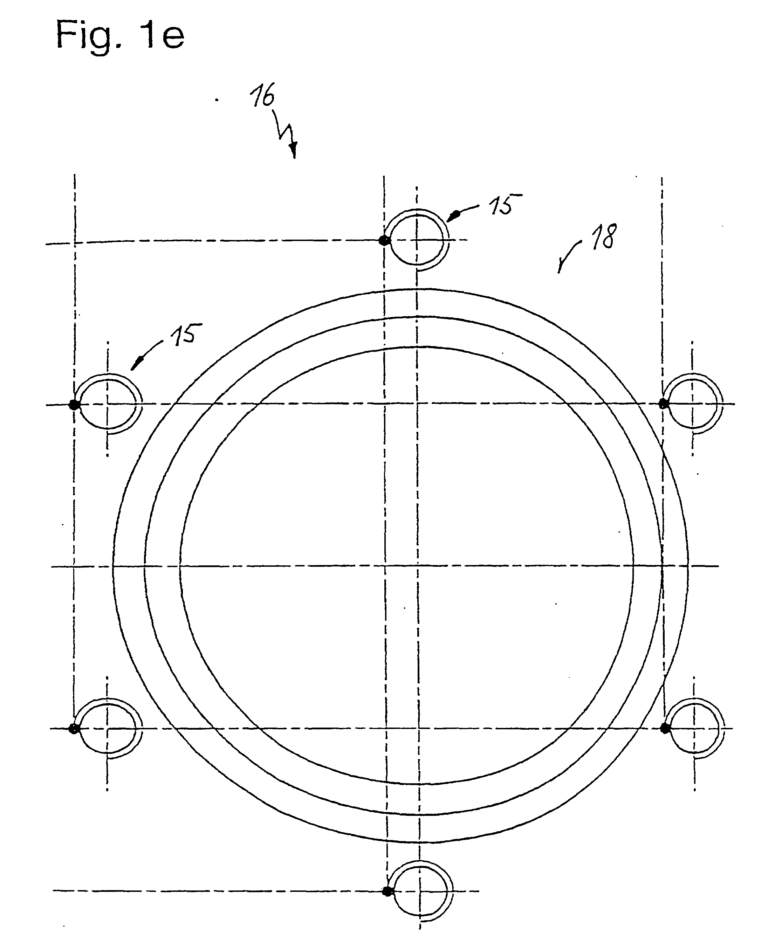

Der Draufsicht der Fig. le ist zu entnehmen, daß mehrere Stiftschrauben 15 in der Ebene der Oberfläche 18 des Zylinderkopfes 16 vor- und hintereinander, insbesonders um den Umfang der die Zylinder abdeckenden Brennraumbereiche des Zylinderkopfes angeordnet sind. Die Stiftschrauben 15 weisen in der Darstellung gemäß Fig. 1e alle die gleiche Winkelorientierung auf; eine derartige Winkelorientierung ist nach Beendigung des ersten Montageschrittes erreicht. Die gleiche Winkelorientierung aller Stiftschrauben erleichtert das gleichzeitige Eingreifen der Montagewerkzeug und das gleichzeitige Anziehen aller Stiftschrauben.

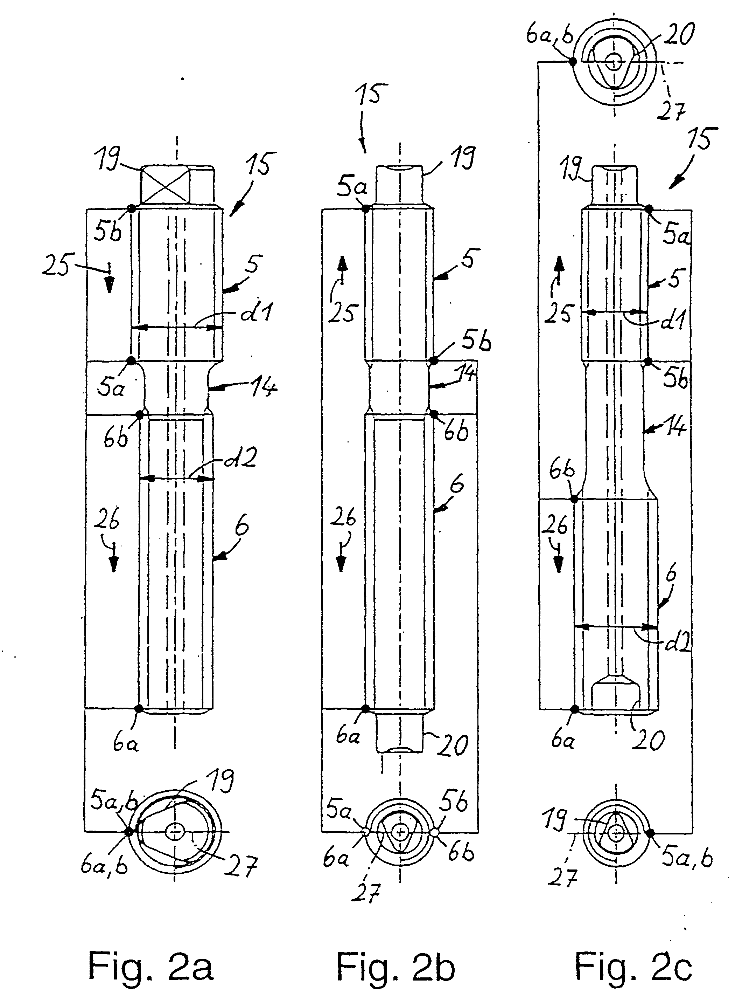

Die Fig. 2a bis 2c zeigen jeweils eine Stiftschraube 15 in unterschiedlichen Ausführungen. Die Stiftschrauben 15 sind jeweils in Seitenansicht und in Draufsicht dargestellt.

Gemäß Fig. 2a ist vorgesehen, daß der erste Gewindeabschnitt 5 der Stiftschraube 15 einen größeren Durchmesser d1 als der zweite Gewindeabschnitt 6 mit Durchmesser d2 aufweist. Die zwei Gewindeabschnitte 5, 6 mit gleichgerichteter Steigung sind durch den gewindefreien Schraubenschaft 14 voneinander getrennt, der einen geringfügig kleineren Durchmesser als der zweite Gewindeabschnitt 6 aufweist. Die verschiedenen Montageschritte erfolgen in Richtung der Pfeile 25, 26, wobei die Vormontage - Vormontieren der Stiftschraube am ersten Bauteil - gemäß der Pfeilrichtung 25 in der gleichen Richtung erfolgt wie die Fertigmontage - drehwinkelgesteuertes Voranziehen und drehmomentgesteuertes Festanziehen - in Pfeilrichtung 26. Zur Vormontage wird die Stiftschraube 25 zunächst mit dem zweiten Abschnitt 6 mit kleinerem Durchmesser so weit durch eine durchgehende Gewindebohrung im ersten Bauteil durchgesteckt, bis der erste Gewindeabschnitt 5 in das Gewinde des ersten Bauteils eingreift. Anschließend erfolgt die Fertigmontage in der gleichen Montagerichtung, wobei der zweite Gewindeabschnitt 6, der ein Gewinde mit größerer Steigung aufweist als der erste Gewindeabschnitt 5, in das entsprechende Gewinde des zweiten Bauteiles eingreift. Da die Vormontage und die Fertigmontage in gleicher Richtung erfolgen, ist es ausreichend, lediglich einen Schraubenkopf 19 an der Stiftschraube 15 vorzusehen, der im Bereich der Stirnseite benachbart zum ersten Gewindeabschnitt 5 angeordnet ist.

Die markierten Punkte 5a, 6a bezeichnen jeweils den Gewindebeginn jedes Gewindeabschnittes 5, 6; entsprechend bezeichnen die Punkte 5b, 6b das Ende jedes Gewindeabschnittes. Wie Fig. 2a entnehmen, liegen alle Punkte 5a, 5b, 6a, 6b in einer gemeinsamen Längsebene 27 der Stiftschraube 15. Der Draufsicht der Fig. 2a ist zu entnehmen, daß der Schraubenkopf 19 zu dieser Längsebene 27 symmetrisch ausgebildet ist. Die Ausrichtung der Gewindeanfänge bzw. der Gewindeenden und des Schraubenkopfes in einer gemeinsamen Richtung ermöglicht ein exaktes und vorab zu bestimmendes Eingreifen der Gewindegänge in die entsprechenden Bohrungen der jeweiligen Bauteile.

Gemäß Fig. 2b ist vorgesehen, daß die zwei Gewindeabschnitte 5 und 6 der Stiftschraube 15 den gleichen Durchmesser aufweisen. Eine derartige Gewindeschraube mit Gewindeabschnitten gleichen Durchmessers ist bei dem zuvor beschriebenen Verfahren am Beispiel gemäß Fig. 1a bis le verwendet worden. Der erste Gewindeabschnitt 5 wird zunächst in Pfeilrichtung 25 am ersten Bauteil vormontiert und anschließend zur Fertigmontage in entgegengesetzter Richtung des Pfeiles 26 verschraubt. Die entgegengesetzten Montagerichtungen der einzelnen Montageschritte bedingen Schraubenköpfe 19, 20 an entgegengesetzten axialen Stirnseiten der Stiftschraube 15. Beide Schraubenköpfe 19, 20 sind als Außenkant-Schlüsselansätze ausgebildet. Die Gewindeanfänge bzw. -enden beider Gewindeabschnitte liegen wiederum in einer gemeinsamen Längsebene 27 der Stiftschraube 15, wobei die Gewindeanfänge 5a, 6a beider Gewindeabschnitte und die Gewindeenden 5b, 6b, auf unterschiedlichen Seiten der Stiftschraube 15 liegen. Der Schraubenkopf ist mit seiner Schmalseite im 90°-Winkel zur Längsebene 27 ausgerichtet.

Gemäß Fig. 2c ist vorgesehen, daß der zweite Gewindeabschnitt 6 einen größeren Durchmesser d2 als der erste Gewindeabschnitt 5 mit Durchmesser d1 aufweist. Die Montagerichtung ist wie im Beispiel gemäß Fig. 2b für die Vormontage zunächst in Richtung des Pfeiles 25, wobei das Montagewerkzeug im entgegengesetzten Schraubenkopf 20 eingreift. Nach Beendigung der Vormontage erfolgt die Fertigmontage in entgegengesetzter Richtung gemäß Pfeil 26; das Montagewerkzeug greift nunmehr am Schraubenkopf 19 an, der benachbart zum ersten Gewindeabschnitt 5 liegt. Der erste Schraubenkopf 19 ist als Außenkant-Schlüsselansatz ausgebildet, der zweite Schraubenkopf 20 ist als Innenkant-Schlüsselansatz ausgebildet. Der Innenkant-Schlüsselansatz, der von einem komplementär geformten Imbusschlüssel zu bedienen ist, zeichnet sich durch eine raumsparende Bauweise aus. Alle Gewindeanfänge bzw. Gewindeenden liegen wiederum in einer gemeinsamen Längsebene 27, wobei der Gewindebeginn und das Gewindeende 5a, 5b des ersten Abschnittes 5 gemeinsam auf einer Seite der Stiftschraube angeordnet sind und der Gewindebeginn und das Gewindeende 6a, 6b des zweiten Gewindeabschnittes 6 auf der diametral gegenüberliegenden Seite der Stiftschraube 15 angeordnet sind.

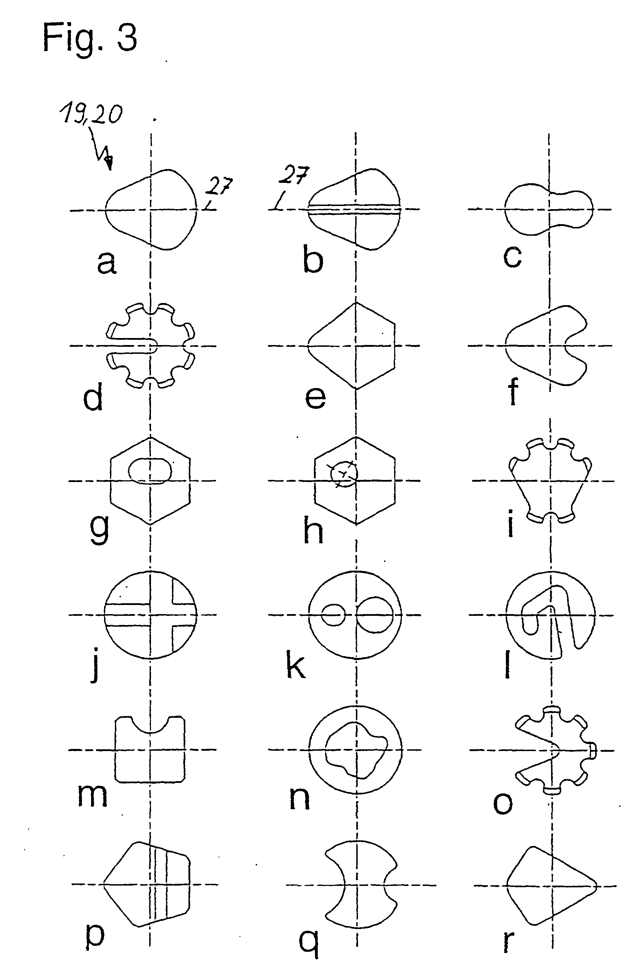

In Fig. 3 sind verschiedene Ausführungen der Schraubenköpfe 19 bzw. 20 gezeigt. Alle Ausführungen haben gemeinsam, daß der Schlüsselansatz des jeweiligen Schraubenkopfes zu maximal einer Längsebene der Stiftschraube symmetrisch ausgebildet ist. Hierdurch kann vorteilhaft ein ausgerichteter Gewindebeginn der Gewindeabschnitte gegenüber dem Schlüsselansatz erreicht werden. Einige Ausführungen sind auch gänzlich unsymmetrisch ausgebildet. Es ist dadurch ohne weiteres möglich, die aktuelle Winkellage der Stiftschraube zu bestimmen. Alle Schraubenköpfe können als Innenkant- oder als Außenkant-Schlüsselansätze ausgeführt sein.

Gemäß Fig. 3a ist vorgesehen, daß der Schraubenkopf zur Längsebene 27 der Stiftschraube symmetrisch ist. Der Schraubenkopf weist zwei diametral gegenüberliegende teilkreisförmige Abschnitte mit unterschiedlich großem Radius auf, wobei der Abschnitt mit größerem Radius über spitz zulaufende Flanken mit dem Abschnitt mit kleinerem Radius verbunden ist.

Die äußere Gestalt des Schraubenkopfes gemäß Fig. 3b entspricht derjenigen aus Fig. 3a; zusätzlich ist eine Nut 27 vorgesehen, die sich entlang der Längsebene 27 erstreckt.

Der Schraubenkopf nach Fig. 3c, der ebenfalls bezüglich einer Längsebene symmetrisch ausgebildet ist, weist zwei teilkreisförmige Abschnitte mit unterschiedlichem Radius auf, wobei der Übergang zwischen den beiden Abschnitten über ebenfalls teilkreisförmige Flanken realisiert ist.

Der Schraubenkopf gemäß Fig. 3d weist acht radial nach außen gerichtete Zinken auf, die gleichmäßig über den Umfang verteilt angeordnet sind. Es ist ein nutförmiger Einschnitt vorgesehen, der sich in der Symmetrieebene erstreckt und der etwas länger als der Radius des Schraubenkopfes ist.

Der Schraubenkopf gemäß 3e besteht aus fünf geraden, winklig zueinander angeordneten Flanken, wobei zwei benachbarte Flanken über einen teilkreisförmigen Abschnitt verbunden sind.

Der Schraubenkopf gemäß Fig. 3f, der bezüglich einer Längsebene symmetrisch ist, hat einen teilkreisförmigen Abschnitt, an den sich divergierend zwei geradlinige Flanken erstrecken. Die Flanken sind auf der dem teilkreisförmigen Abschnitt abgewandten Seite durch einen gerundeten Abschnitt miteinander verbunden, der eine etwa halbkreisförmige Ausnehmung aufweist.

Der Schraubenkopf gemäß Fig. 3g ist als konventioneller Sechskant-Schraubenkopf ausgeführt, wobei eine exzentrische Ausnehmung mit zwei halbkreisförmigen Abschnitten vorgesehen ist.

Der Schraubenkopf gemäß Fig. 3h ist eine ähnlich Ausführung wie derjenige aus Fig. 3g, wobei die Ausnehmung einen kreisförmigen Querschnitt hat.

Der Schraubenkopf gemäß Fig. 3i ist wie derjenige aus Fig. 3d mit radial nach außen gerichteten Zinken versehen, wobei auf gegenüberliegenden Seiten der Symmetrieebene jeweils ein Zinken fehlt. Die Fehlstellen sind so angeordnet, daß auf einer Seite des Schraubenkopfes vier Zinken und auf der gegenüberliegenden Schraubenkopfseite zwei Zinken angeordnet sind.

Der Schraubenkopf gemäß Fig. 3j hat einen kreisförmigen Querschnitt, wobei zwei rechtwinklig zueinanderliegende Nuten vorgesehen sind und eine dieser Nuten außerhalb einer Längsebene des Schraubenstiftes liegt.

Der Schraubenkopf gemäß Fig. 3k hat ebenfalls einen kreisförmigen Querschnitt; weiterhin sind zwei exzentrische, kreisförmige Ausnehmungen mit unterschiedlichem Radius vorgesehen.

Der Schraubenkopf gemäß Fig. 3l hat ebenfalls einen kreisförmigen Querschnitt; es ist eine nutförmige Ausnehmung vorgesehen, die etwa die Querschnittsgestalt der Zahl "7" aufweist, wobei der lange Schenkel der Nut die Außenkontur des Schraubenkopfes durchbricht. Der Schraubenkopf gemäß Fig. 3l weist einen vollständig unsymmetrischen Querschnitt auf.

Der Schraubenkopf gemäß Fig. 3m hat einen quadratischen Querschnitt, wobei eine Flanke des Quadrats eine halbkreisförmige Ausnehmung aufweist.

Der Schraubenkopf gemäß 3n hat einen kreisförmigen Querschnitt mit einer innenliegenden, regellosen Ausnehmung, wodurch der Schraubenkopf eine unsymmetrische Querschnittsgestalt hat.

Der Schraubenkopf gemäß Fig. 3o ist wie derjenige der Fig. 3d, 3i mit radial nach außen gerichteten Zinken versehen, wobei ein Zinken fehlt und an Stelle des Zinkens eine dreieckförmige Ausnehmung angebracht ist.

Der Schraubenkopf gemäß Fig. 3p ist fünfeckig ausgebildet; es ist weiterhin eine außerhalb der Symmetrieebene liegende, durchgehende Nut vorgesehen.

Der Schraubenkopf gemäß Fig. 3q hat eine kreisförmige Querschnittsgestalt; an diametral gegenüberliegenden Seiten sind zwei teilkreisförmige Ausnehmungen mit unterschiedlich großem Radius vorgesehen.

Der Schraubenkopf gemäß Fig. 3r hat einen trapezförmigen Querschnitt.

Die verschiedenen Schraubenkopfformen ermöglichen eine eindeutige Kennzeichnung der Winkellage der Stiftschrauben. Die unsymmetrische Form bzw. die nur bezüglich einer Längsebene symmetrische Form der Schraubenköpfe stellt insoweit eine Markierung für die jeweilige Winkellage der Stiftschraube dar, bzw. es kann hierdurch eine eindeutige Ausrichtung des Gewindebeginns der Gewindeabschnitte zu den Schraubenköpfen erzielt werden.

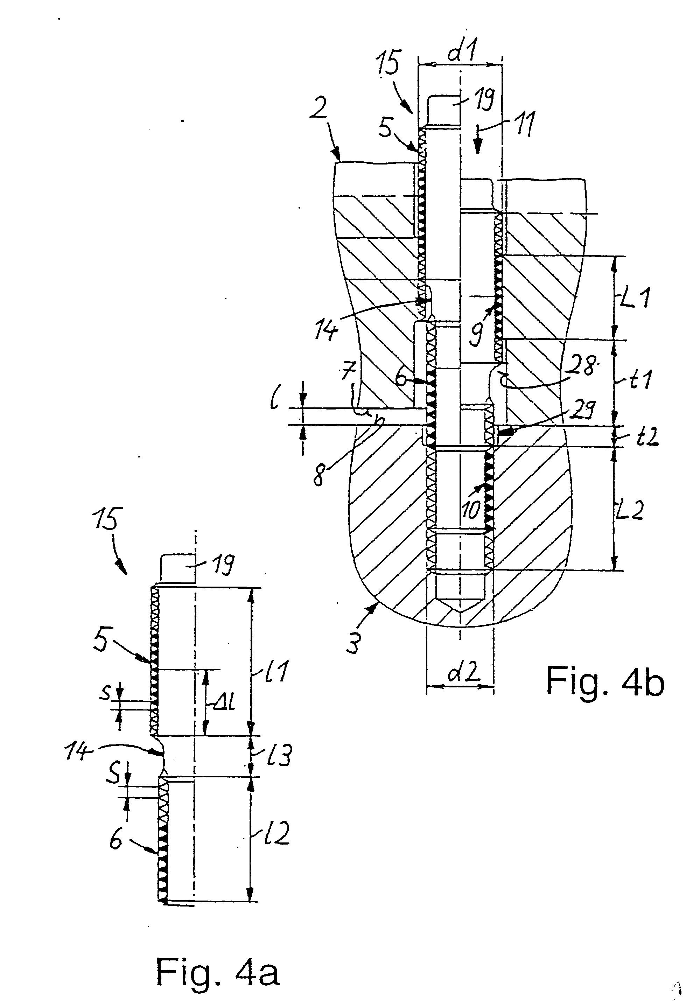

In den Fig. 4a, 4b ist ein Beispiel für eine zweckmäßige Dimensionierung einer Stiftschraube bei vorgegebenen Proportionen der Gewindebohrungen in den beiden zu verschraubenden Bauteilen gezeigt.

Die Stiftschraube 15 ist in die Gewindebohrungen 9, 10 der Bauteile 2 bzw. 3 eingeschraubt. Die Stiftschraube 15 weist zwei Gewindeabschnitte 5, 6 mit unterschiedlichem Durchmesser d1, d2 auf, wobei der erste Gewindeabschnitt 5 eine kleinere Steigung s als der zweite Gewindeabschnitt 6 mit größerer Steigung S aufweist, siehe Fig. 4a. Der Gewindeabschnitt 5 hat die Länge 11, der Gewindeabschnitt 6 die Länge 12. Die beiden Gewindeabschnitte sind durch den gewindefreien Schraubenschaft 14 mit der Länge 13 getrennt. Dem ersten Gewindeabschnitt 5 benachbart ist ein Schraubenkopf 19 vorgesehen.

Fig. 4b zeigt die Stiftschraube 15 in zwei verschiedenen Positionen eingeschraubt in die Bauteile 2, 3. In der linken Teilhälfte der Fig. 4b ist die Stiftschraube 15 nur mit dem Gewinde der ersten Gewindebohrung 9 des Bauteiles 2 verschraubt, während der zweite Gewindeabschnitt 6 der Stiftschraube 15 gerade am Gewinde der zweiten Gewindebohrung 10 des Bauteiles 3 einzugreifen beginnt; die einander zugewandten Oberflächen 7 und 8 der Bauteile 2 bzw. 3 weisen den Abstand l zueinander auf. Der Abstand l ist so gewählt, daß infolge der Differenz der Gewindesteigungen S und s der Gewindeabschnitte 6 bzw. 5 der Abstand l nach n Umdrehungen der Stiftschraube 15 überwunden wird; der Abstand l berechnet sich demzufolge aus der Differenz der Gewindesteigungen multipliziert mit der Anzahl n an Umdrehungen.

In der rechten Teilhälfte der Fig. 4b ist die Stiftschraube 15 vollständig in die Gewindebohrungen 9, 10 der Bauteile 2 und 3 eingeschraubt, so daß die Oberflächen 7, 8 der Bauteile 2, 3 mit Kontakt aneinanderliegen.

An die Gewindebohrung 9 im Bauteil 2, die die Länge L1 hat, schließt sich in Richtung des zweiten Bauteiles 3 ein gewindefreier Abschnitt 28 der Länge t1 an. In entsprechender Weise ist auch die Ausnehmung im Bauteil 3 ausgeführt. Dem Bauteil 2 zugewandt ist zunächst ein gewindefreier Abschnitt 29 der Länge t2 vorgesehen, an den sich die Gewindebohrung 10 der Länge L2 anschließt. Die Ausnehmung im Bauteil 2 ist als durchgehende Bohrung, die Ausnehmung im Bauteil 3 als Sacklochbohrung ausgeführt.

Um die Stiftschraube 15 so zu proportionieren, daß die Bauteile 2, 3 ohne Probleme verschraubt werden können, ist vorgesehen, die Länge 11 des ersten Gewindeabschnitts 5 der Stiftschraube 15 um ein bestimmtes Maß Δ1 gegenüber der Länge L1 des aufnehmenden Gewindes 9 des Bauteils 2 vergrößert auszuführen. Die Länge 13 des gewindefreien Schraubenschaftes 14 der Stiftschraube 15 entspricht dabei der Länge t1 und t2 der beiden gewindefreien Abschnitte 28, 29 in den Bauteilen 2 bzw. 3, reduziert um das Maß Δ1. Mit anderen Worten ist die Länge des ersten Gewindeabschnittes 5 und des Schraubenschaftes 14 der Stiftschraube 15 etwa gleich lang wie die Länge der Gewindebohrung 9 im Bauteil 2 einschließlich der beiden gewindefreien Abschnitte 28, 29, wobei lediglich die Längenverhältnisse von Gewindeabschnitt zu gewindefreiem Abschnitt verschoben sind. Dies hat den Vorteil, daß der erste Gewindeabschnitt 5 der Stiftschraube 15, der länger ausgeführt ist als die entsprechende Gewindebohrung 9 im Bauteil 2, während der Vormontage bereits teilweise in die Gewindebohrung 9 eingeschraubt werden kann und dadurch im Bauteil 2 unverlierbar gehalten ist. Zur Fertigmontage wird die Stiftschraube 15 mit dem Bauteil 2 in eine Flucht mit der Gewindebohrung 10 im zweiten Bauteil 3 gebracht, wobei das Gewinde des zweiten Gewindeabschnitts 6 der Stiftschraube 15 gerade am Gewindebeginn der Gewindebohrung 10 anliegt; die Stiftschraube 15 ist dabei so weit in der ersten Gewindebohrung 9 eingeschraubt worden, daß die beiden Bauteile 2, 3 mit einem bestimmten Abstand l zueinander liegen, der nach einer vorgegebenen Anzahl an Umdrehungen n überwunden wird. Gemäß einer zweckmäßigen Weiterbildung ist vorgesehen, daß die Länge 12 des zweiten Gewindeabschnittes 6 nicht länger ist als das aufnehmende Gewinde 10 des zweiten Bauteils 3, das die Länge L2 aufweist. In vollständig eingeschraubter Lage ist der zweite Gewindeabschnitt 6 der Stiftschraube 15 vollständig von der Gewindebohrung 10 des zweiten Bauteiles 3 aufgenommen; auch der erste Gewindeabschnitt 5 ist vollständig in die erste Gewindebohrung 9 eingeschraubt, wobei der gewindefreie Abschnitt 14 der Stiftschraube 15 im Bereich der gewindefreien Abschnitte 28, 29 der Bauteile 2, 3 liegt.

Die Dimensionierung der Stiftschraube in Abhängigkeit von den Proportionen der zu verschraubenden Bauteile wird zweckmäßig in Form eines Algorithmus auf einer Datenverarbeitungsanlage bestimmt.

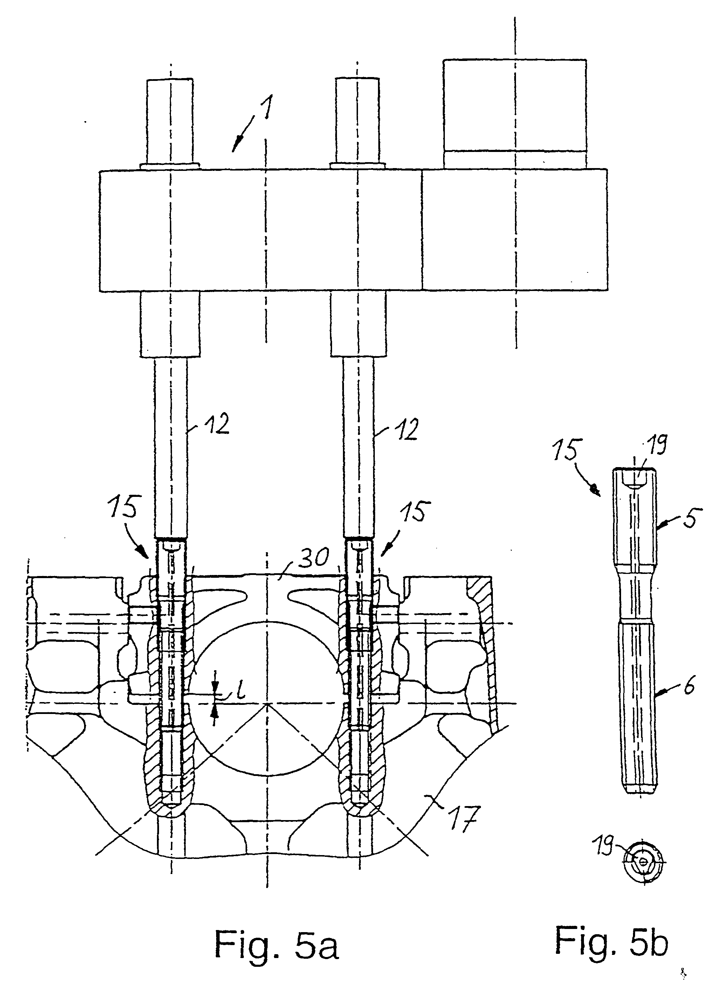

In den Fig. 5a bis 5d ist ein weiteres Ausführungsbeispiel anhand der Montage eines Kurbelwellenlagerdeckels auf ein Kurbelgehäuse gezeigt. Gemäß Fig. 5a werden zwei parallele Stiftschrauben 15 von dem Montageautomaten 1 über die Montagewerkzeuge 12 in Gewindebohrungen eines Kurbelwellenlagerdeckels 30 und eines Kurbelgehäuses 17 eingeschraubt. Fig. 5a zeigt die Vorrichtung zu Beginn des drehwinkelgesteuerten Voranziehens; in dieser Position klafft zwischen dem Kurbelgehäuse 17 und dem Kurbelwellenlagerdeckel 30 ein Spalt der Breite 1. Gemäß Fig. 5b wird eine Stiftschraube 15 mit zwei Gewindeabschnitten, 5, 6 unterschiedlichen Durchmessers (Abschnitt 5 hat den größeren Durchmesser) verwendet, die dafür geeignet ist, die Vormontage und die Endmontage in der gleichen Montagerichtung durchzuführen. Der Schraubenkopf 19 ist als Innenkant-Schlüsselansatz ausgeführt.

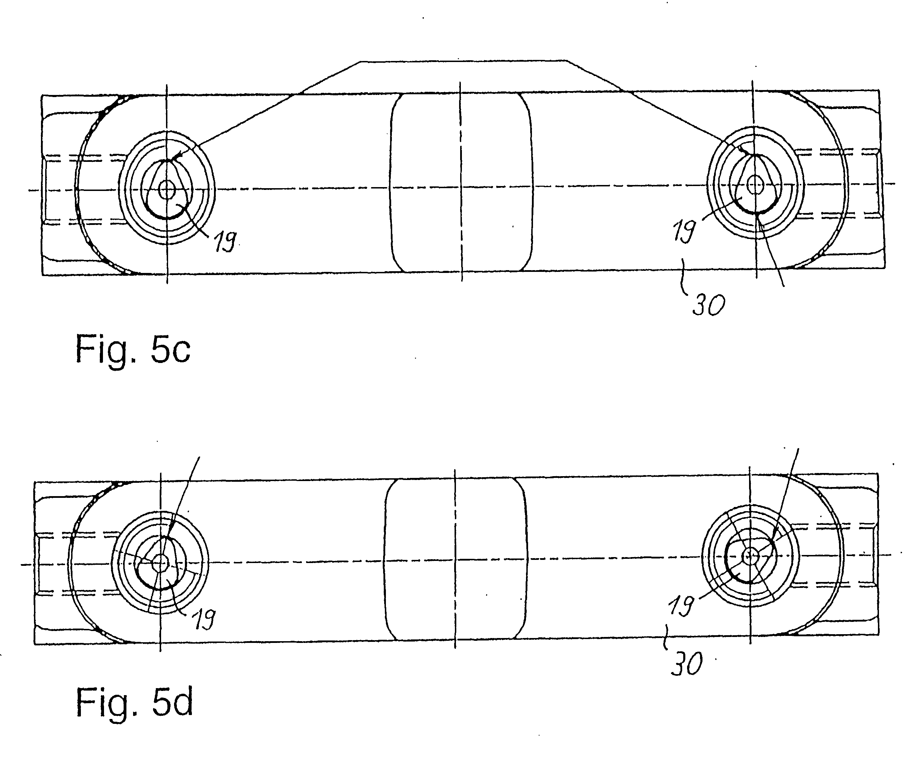

Die Fig. 5c und 5d zeigen eine Draufsicht auf den Kurbelwellenlagerdeckel 30 in verschiedenen Stadien des Anziehvorganges. In Fig. 5c sind die Stiftschrauben zu Beginn des Montagevorganges bzw. nach Beendigung des drehwinkelgesteuerten Voranziehens dargestellt; die Schraubenköpfe 19 der Stiftschrauben sind in die gleiche Richtung ausgerichtet. Fig. 5d zeigt die Stiftschrauben am Ende des Montagevorganges. Nach dem drehmomentgesteuerten Festanziehen weisen die Stiftschrauben nach Erreichen eines gemeinsamen vorgegebenen Drehmoment-Endwertes eine individuelle Winkellage auf. Die unterschiedliche Winkellage kann auch dadurch zustande kommen, daß jede Stiftschraube mit einem individuellen Anzugsdrehmoment festgezogen wird.

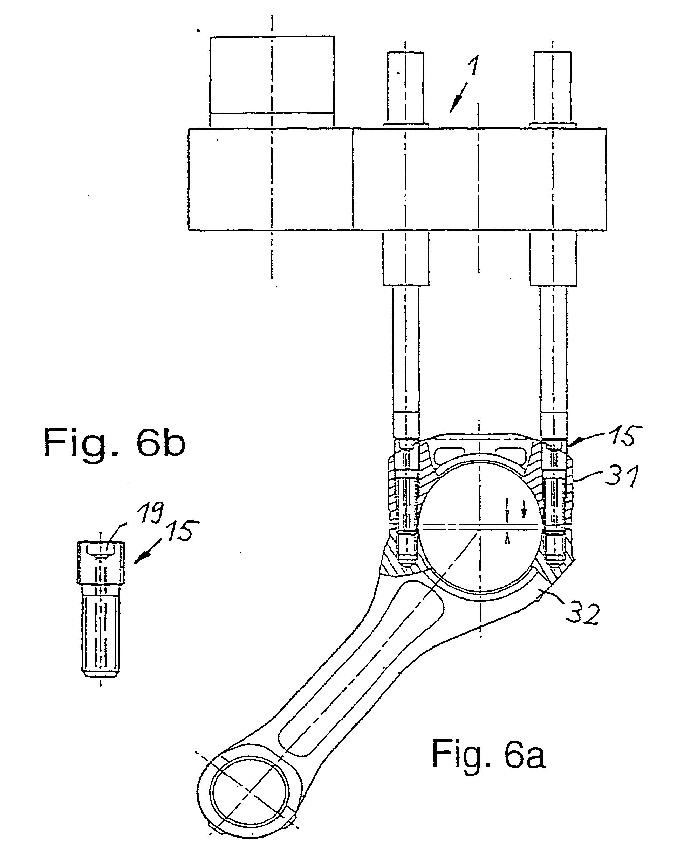

In den Fig. 6a, 6b ist die Montage eines Lagerdeckels 31 auf eine Pleuelstange 32 gezeigt. Die Gewindeabschnitte der Stiftschraube 15 weisen wiederum einen unterschiedlichen Durchmesser auf und der Schraubenkopf 19 ist als Innenkant-Schlüsselansatz ausgebildet. Die Stiftschrauben 15 werden vollständig in die Bauteile 31, 32 versenkt, wodurch der Bauraum reduziert wird. Aufgrund des gleichgängigen Differenzgewindes können Stiftschrauben 15 mit einem geringen Anzugsdrehmoment festgezogen werden, wobei dennoch eine hohe Schraubenkraft zwischen den Bauteilen wirkt. Denkbar ist es auch, Stiftschrauben 15 mit gleichen Durchmessern an den Gewindeabschnitten zu verwenden. Der Lagerdeckel 31 wird durch Brechen (sog. Cracken) oder Ziehen von der Pleuelstange getrennt. Die Gewindebohrungen in der Pleuelstange werden jedoch vor dem Brechen (Cracken) hergestellt. Im Lagerdeckel 31 ist der Gewindeabschnitt mit dem größeren Durchmesser und der kleineren Gewindesteigung vorgesehen. Der Gewindeabschnitt mit dem kleineren Durchmesser und der größeren Gewindesteigung befindet sich in der Pleuelstange, wobei beide Gewindeabschnitte durch einen gewindelosen Bohrungsabschnitt getrennt sind, in dessen Ebene auch die Bruchebene zwischen Pleuelstange und Lagerdeckel gelegt ist. Im vormontierten Zustand von Lagerdeckel 31 und Pleuelstange 32 wird durch die Stiftschrauben 15 stets ein in jeder Richtung wirkender Formschluß und im festmontierten Zustand ein ebenfalls in jeder Richtung wirkender Formschluß und Kraftschluß erreicht. Die vormontierten Bauteile 31 und 32 bewegen sich bei der Fertigmontage aufeinander zu, wobei die Bruchflächen an der Pleuelstange und dem Lagerdeckel sich zunächst berühren, bevor sie gegeneinander verspannt werden. Ein derart verschraubter Lagerdeckel 31 erfordert keine weiteren Sicherungselemente gegen Längs- und Querschub bzw. Drehung der Bauteile zueinander.

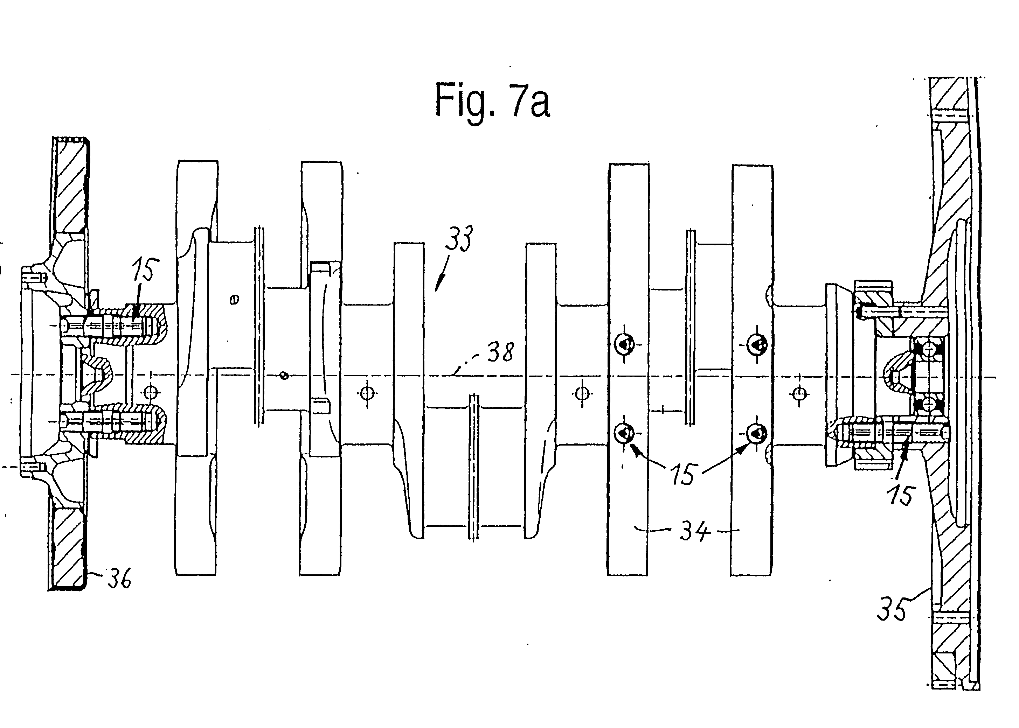

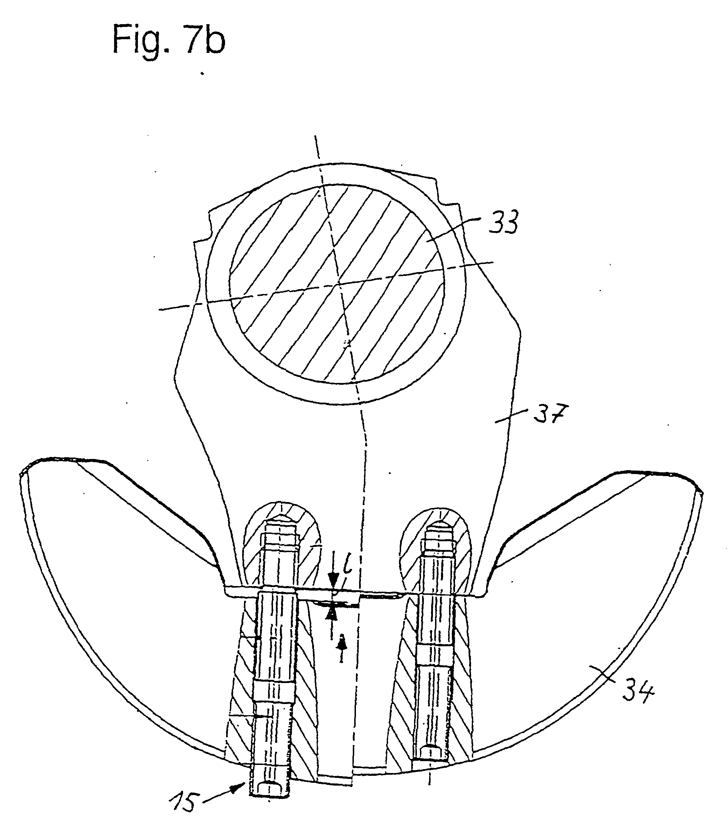

Die Fig. 7a, 7b zeigen eine Kurbelwelle mit einem aufmontierten Schwungrad und mehreren Gegengewichten. Die Gegengewichte 34 sind mittels der Stiftschrauben 15 mit der Kurbelwelle 33 verschraubt, wobei die Stiftschrauben etwa radial in Richtung der Längsachse 38 der Kurbelwelle ausgerichtet sind. Weiterhin ist an einem Kurbelwellenende ein Schwungrad 35 vorgesehen, das ebenfalls über Stiftschrauben 15 an die Kurbelwelle 33 angeschraubt ist. Die Stiftschrauben 15 des Schwungrades 35 liegen achsparallel zur Längsachse 38 der Kurbelwelle 33. Auf der dem Schwungrad 35 gegenüberliegenden Seite der Kurbelwelle 33 ist ein weiteres Ausgleichsgewicht 36 vorgesehen, das gleichfalls mittels Stiftschrauben 15 an der Kurbelwelle befestigt ist.

Fig. 7b zeigt einen Schnitt durch die Kurbelwelle 33 mit einer Ansicht auf ein Gegengewicht 34. In der linken Teilhälfte der Fig. 7b ist das Gegengewicht 34 zu Beginn des Montagevorgangs dargestellt; das Gegengewicht 34 liegt noch mit Abstand l zu einem Nocken 37 der Kurbelwelle 33, an dem das Gegengewicht befestigt wird. In der rechten Teilhälfte der Fig. 7b ist das Gegengewicht 34 fest am Nocken 37 angezogen.

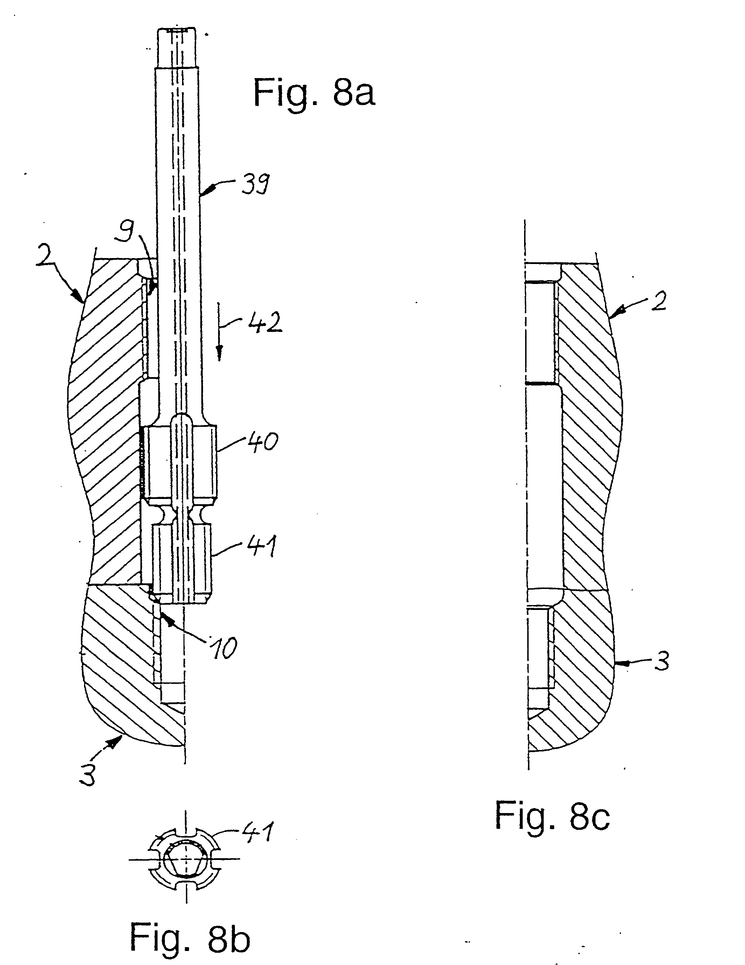

Die Fig. 8a bis 8f zeigen verschiedene Vorrichtungen und Verfahren zum Einbringen von Gewinden in vorgebohrte Bauteile.

Die Fig. 8a bis 8c zeigen das Herstellen von gleichgerichteten Gewinden unterschiedlicher Steigung in vorgebohrte Bauteile 2, 3. Die Gewindebohrungen 9, 10 in den jeweiligen Bauteilen 2, 3 werden im Gewindeschneidverfahren erzeugt; alternativ dazu ist auch ein spanloses Gewinderollen möglich.

Das Gewindeschneiden erfolgt mit einem Gewindeschneidwerkzeug 39, welches im Bereich eines axialen Endes zwei hintereinander angeordnete Schneidköpfe 40, 41 aufweist, wobei der erste Schneidkopf 40 einen größeren Durchmesser aufweist als der zweite Schneidkopf 41, der sich bis zur axialen Stirnseite des Schneidwerkzeuges 39 erstreckt. Die beiden Schneidköpfe 40, 41 erzeugen Gewinde mit unterschiedlichen Steigungen, wobei zweckmäßig der erste Schneidkopf 40 mit größerem Durchmesser ein Gewinde kleinerer Steigung erzeugt als der zweite Schneidkopf 41. Die beiden Gewindebohrungen 9, 10 werden vorteilhaft in einem Arbeitsgang in Richtung des Pfeiles 42 erzeugt, wobei zunächst das Gewinde der Gewindebohrung 9 in das Bauteil 2 von dem Gewindekopf 40 eingeschnitten wird und anschließend das Gewinde der Gewindebohrung 10 des zweiten Bauteiles 3 vom Schneidkopf 41 eingeschnitten wird. An das Gewinde der Gewindebohrung 9 schließt sich ein gewindefreier Abschnitt an, dessen Durchmesser so bemessen ist, daß der erste Schneidkopf 40 ohne Behinderung hindurchgeführt werden kann. Der Vorschub des Schneidwerkzeuges 39 ist vorteilhaft in Abhängigkeit von der Umdrehungsgeschwindigkeit und der jeweiligen Gewindesteigung gewählt.

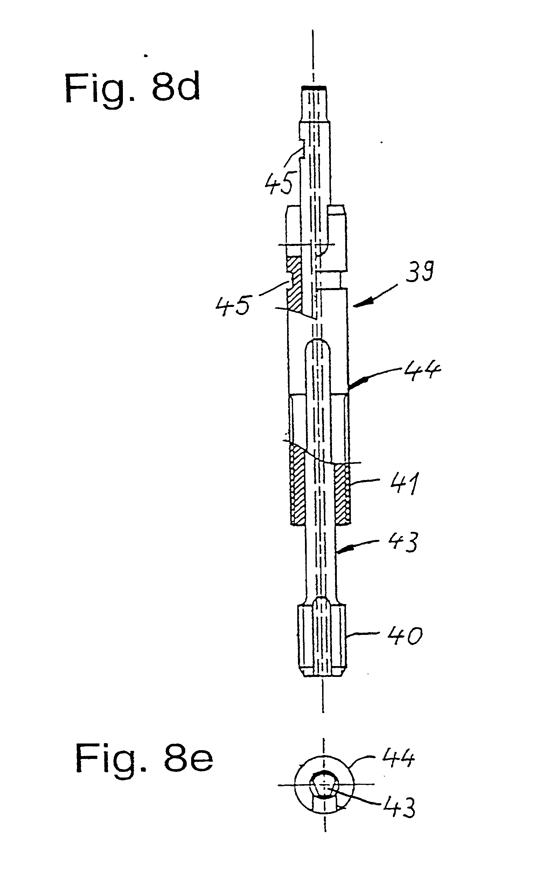

Die Fig. 8d, 8e zeigen ein Gewindeschneidwerkzeug 39 in zweiteiliger Ausführung. Das Schneidwerkzeug 39 weist eine Gewindestange 43 mit einem ersten Schneidkopf 40 kleineren Durchmessers auf. Die Gewindestange 43 ist in Achsrichtung relativ zu einer Gewindehülse 44 zu bewegen, deren Außengewinde als Schneidkopf 41 mit größerem Durchmesser ausgebildet ist. Der Schneidkopf 40 an der Gewindestange 43 ist zweckmäßig dazu geeignet, ein Gewinde mit größerer Steigung zu schneiden als der Schneidkopf 41 an der Gewindehülse 44. Auf der den jeweiligen Schneidköpfen abgewandten Seite weisen sowohl die Gewindestange 43 als auch die Gewindehülse 44 Eingriffe 45 auf, mit denen die jeweiligen Bauteile axial gesichert werden können.

Der Draufsicht der Fig. 8e ist zu entnehmen, daß sowohl die Gewindestange 43 als auch die umgreifende Gewindehülse 44 einen charakteristisch geformten Schraubenkopf aufweisen, der eindeutig erkennen läßt, in welcher aktuellen Winkellage sich die Gewindestange und die Gewindehülse befinden.

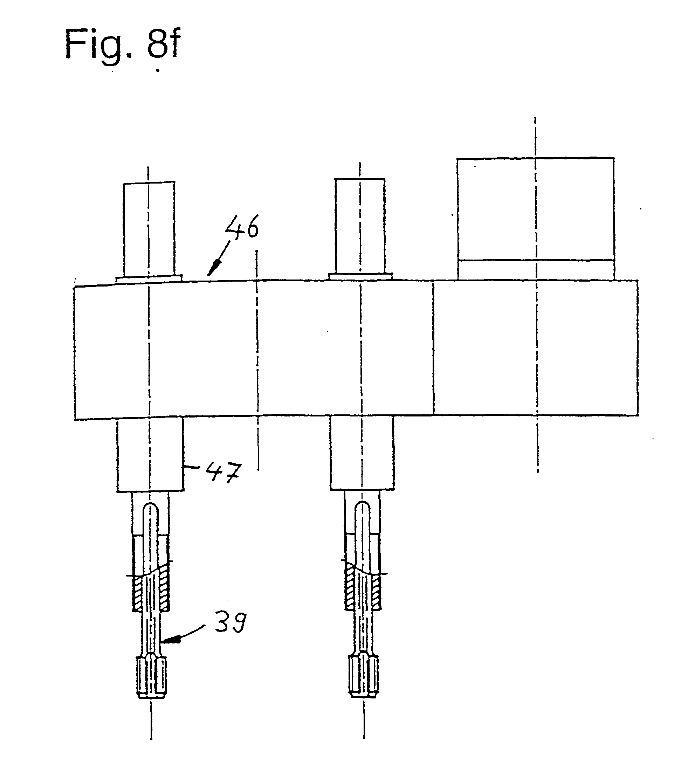

Fig. 8f zeigt eine Bohrvorrichtung 46, die mit Aufnahmeeinheiten 47 versehen ist, in die die Gewindeschneidwerkzeuge eingesetzt werden können. Die Bohrvorrichtung 46 weist eine Vorschubsteuerung auf, die in Abhängigkeit von der Steigung des zu schneidenden Gewindes eingestellt werden kann. Als Bohrvorrichtung 46 kann der Montageautomat eingesetzt werden.

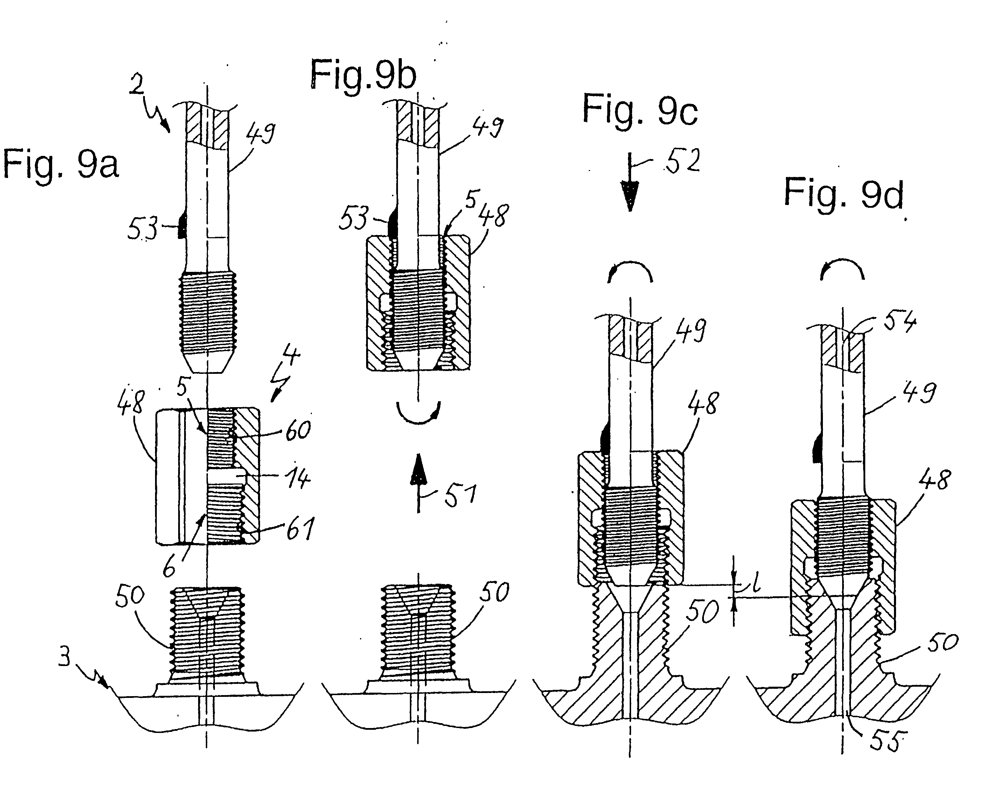

In den Fig. 9a bis 9d ist das Verbindungselement 4 in der Ausführung als Überwurfmutter 48 dargestellt. Zur besseren Verständlichkeit sind gleiche Bauteile wie bei den bisher beschriebenen Beispielen mit gleichen Bezugszeichen versehen.

Die Überwurfmutter 48 weist zwei Gewindeabschnitte 5, 6 auf, die jeweils als Innengewinde 60, 61 der etwa zylinderförmigen Überwurfmutter ausgeführt sind. Die Gewindeabschnitte 5, 6 sind gleichgerichtet und haben eine unterschiedliche Gewindesteigung. Der zweite Gewindeabschnitt 6 mit größerer Steigung weist auch einen größeren Durchmesser auf. Der Außenmantel der Überwurfmutter 48 ist zweckmäßig mit einer Schlüsselkontur versehen, so daß die Überwurfmutter von einem entsprechend geformten Werkzeug angezogen und gelöst werden kann. Zwischen den beiden Gewindeabschnitten 5, 6 ist ein gewindefreier Innenabschnitt 14 vorgesehen. Der erste und der zweite Gewindeabschnitt 5 bzw. 6 erstrecken sich jeweils etwa über knapp die halbe Länge der Überwurfmutter und sind von dem gewindefreien Innenabschnitt geringer Länge getrennt.

Die Überwurfmutter 48 ist dafür vorgesehen, zwei Gewindeglieder 49, 50 zu verbinden, die mit den Gewindeabschnitten 5, 6 der Überwurfmutter entsprechenden Gewinden versehen sind. Die Gewindeglieder 49, 50 sind als Gewindebolzen bzw. Gewindestutzen ausgeführt und sind Teile von Bauteilen 2, 3.

Zum Verschrauben der Gewindeglieder 49, 50 wird die Überwurfmutter 48 gemäß Fig. 9b mit dem ersten Gewindeabschnitt 5 kleineren Durchmessers zunächst auf das Gewindeglied 49 in Richtung des Pfeiles 51 aufgeschraubt. Hierbei ist zu beachten, daß die Überwurfmutter so weit aufgeschraubt wird, bis ein Teil des ersten Gewindeabschnittes 5 im Bereich des gewindefreien Abschnittes des Gewindegliedes 49 liegt. Zweckmäßig ist ein Anschlag 53 am Gewindeglied 49 vorgesehen, der am gewindefreien Teil des Gewindeglieds 49 angeordnet ist und die Endstellung der in Fig. 9b gezeigten Vormontage markiert. In dieser Endstellung liegt der Anschlag 53 des Gewindegliedes 49 an der Stirnseite der Überwurfmutter 48 an.

Für die Endmontage wird die Überwurfmutter 48 gemäß Fig. 9c, 9d in Gegenrichtung 52 auf das zweite Gewindeglied 50 aufgeschraubt, wobei die sich an den Gewindeabschnitt des Gewindeglieds 49 anschließende Stirnseite kegelig zuläuft und in eine komplementär geformte, trichterförmige Ausnehmung im zweiten Gewindeglied 50 einführbar ist.

Die Fig. 9c stellt den Beginn der Endmontage dar, in der die kegelig zulaufende Stirnseite des ersten Gewindeglieds 49 mit axialem Abstand l zur trichterförmigen Ausnehmung des zweiten Gewindeglieds 50 liegt. Der Abstand l entspricht vorteilhaft der Differenz der Gewindesteigungen der Gewindeabschnitte 6 bzw. 5 der Überwurfmutter 48, multipliziert mit der Anzahl an Umdrehungen n, die die Überwurfmutter 48 zur Überwindung des Abstandes l ausführen muß.

Fig. 9d zeigt die Vorrichtung in fertig montiertem Zustand, in welchem die Gewindeglieder 49, 50 fest verbunden sind. Die Gewindeglieder 49, 50 können als Leitungen ausgebildet sein und einen Innenkanal 54, 55 aufweisen. Die kegelige Ausbildung der Stirnseite des Gewindegliedes 49 und die komplementär geformte Ausnehmung im Gewindeglied 50 gewährleisten hierbei eine dichte Verbindung.

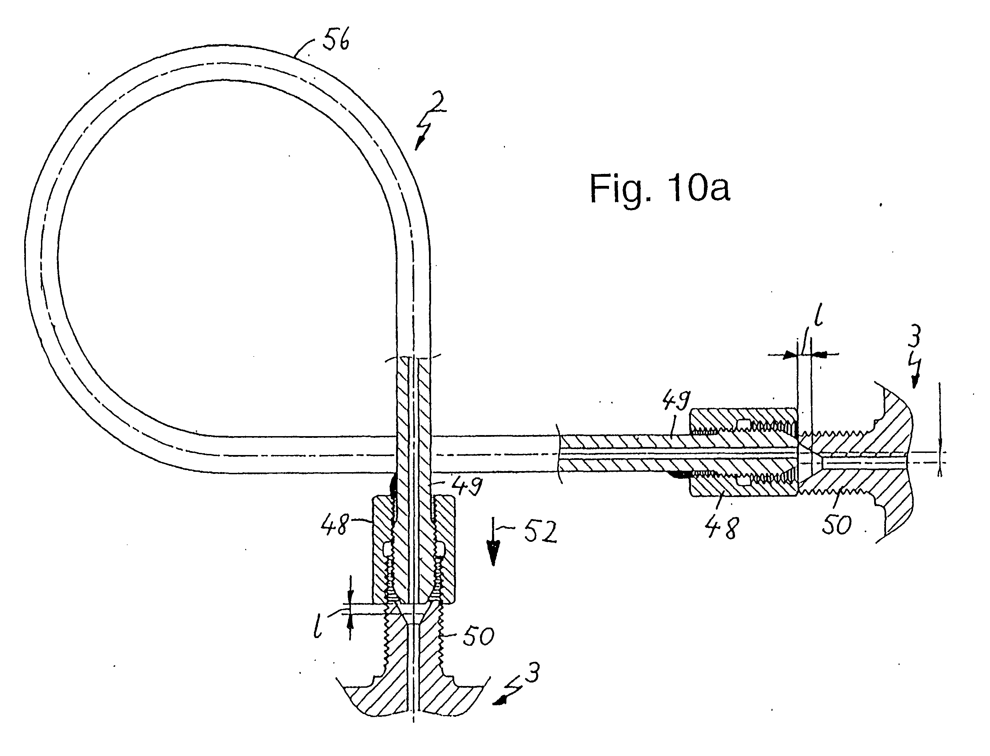

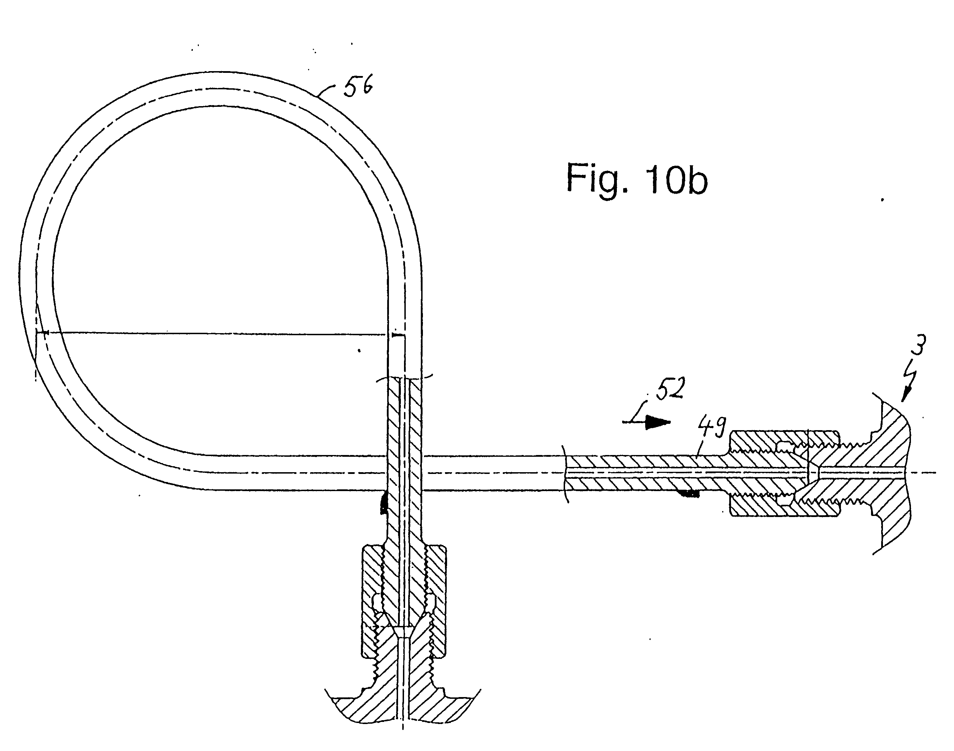

Die Fig. 10a, 10b zeigen das vorgeschriebene Verfahren unter Verwendung einer Überwurfmutter am Beispiel einer Einspritzleitung. Das Bauteil 2 ist als Einspritzleitung 56 ausgeführt, die an ihren jeweiligen axialen Endbereichen mit Gewindegliedern 49 versehen ist. Die beiden Gewindeglieder 49 sollen mit Hilfe von Überwurfmuttern 48 auf Gewindestutzen 50 eines Bauteiles 3 aufgeschraubt werden.

Die Einspritzleitung 56 beschreibt einen Bogen, so daß die im Endbereich angeordneten Gewindeglieder 49 sich winklig kreuzen, insbesondere unter einem Winkel von etwa 90°. Zu Beginn des Verschraubungsvorganges liegt die axiale Stirnseite jedes Gewindegliedes 49 mit Abstand l zur aufnehmenden trichterförmigen Ausnehmung im jeweiligen Gewindestutzen 50. Es wird zunächst nur ein Gewindeglied 49 in Richtung des Pfeiles 52 mit der Überwurfmutter 48 auf den Gewindestutzen 50 aufgesetzt und lediglich geringfügig angezogen, um die Einspritzleitung 56 unverlierbar festzulegen.

Gemäß Fig. 10b wird im folgenden Schritt das Gewindeglied 49 am gegenüberliegenden Ende der Einspritzleitung vorangezogen, so daß auch das zweite Ende der Einspritzleitung 56 mit dem Bauteil 3 verbunden ist. Daraufhin werden beide Gewindemuttern nacheinander oder gleichzeitig bis zum Erreichen einer vorgegebenen Winkellage bzw. eines vorgegebenen Drehmoment-Endwertes festgezogen, so daß eine flüssigkeitsdichte und druckdichte Verbindung gegeben ist.

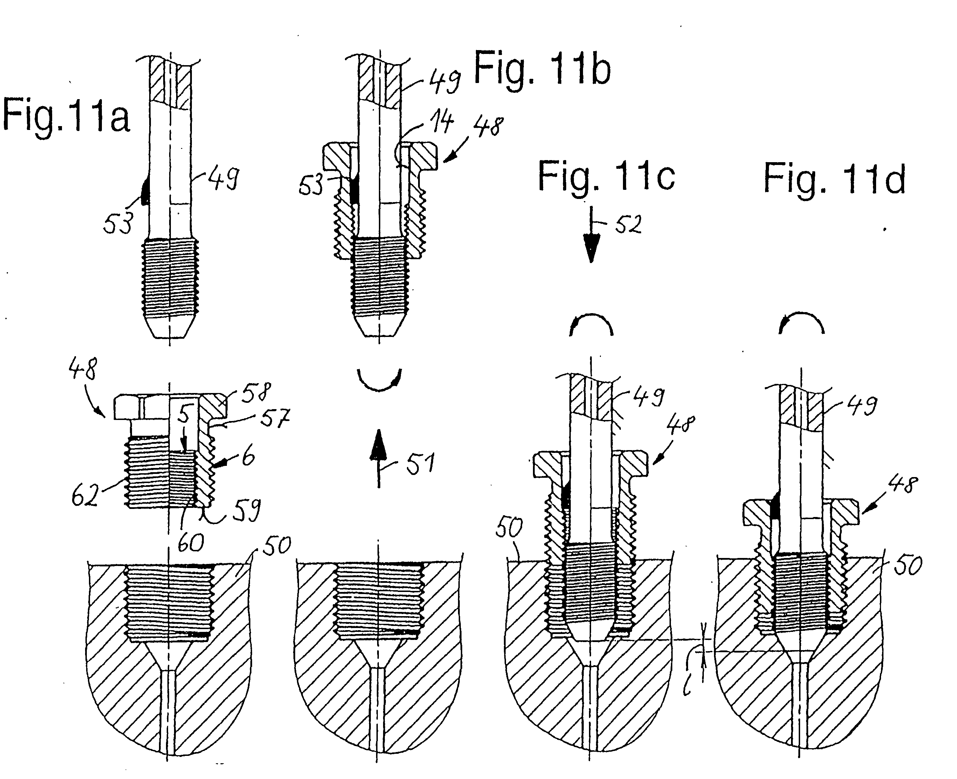

Die Fig. 11a bis 11d zeigen das Verschrauben von zwei Bauteilen mit einer Überwurfmutter 48 in einer anderen Ausführung. Die Überwurfmutter 48 weist einen ersten Gewindeabschnitt 5 mit kleiner Steigung auf, welcher sich auf der Innenseite der Überwurfmutter etwa über die halbe Länge der Überwurfmutter erstreckt. Der zweite Gewindeabschnitt 6 ist auf der Außenseite 57 der Überwurfmutter mit größerem Durchmesser angeordnet; der Gewindeabschnitt 6 hat eine größere Steigung als der als Innengewinde 60 ausgebildete erste Gewindeabschnitt 5, er ist geringfügig länger als die halbe Länge der Überwurfmutter 48 ausgebildet. Beide Gewindeabschnitt erstrecken sich bis zur gleichen Stirnseite 59 der Überwurfmutter. Im Anschluß an den zweiten, als Außengewinde 62 ausgebildeten Gewindeabschnitt 6 ist ein Mutternkopf 58 vorgesehen, dessen Durchmesser vorteilhaft größer ist als der Durchmesser des Außengewindes 62. Der Mutternkopf 58 weist zweckmäßig eine Kontur auf, die ein problemloses Ansetzen eines Montagewerkzeuges erlaubt und zudem die aktuelle Winkellage der Überwurfmutter kennzeichnet. Auf der Außenseite 57 ist zwischen dem Mutternkopf 58 und dem Außengewinde 62 ein kurzer gewindefreier Abschnitt vorgesehen.

Das Außengewinde 62 der Überwurfmutter ist in das Gewindeglied 50 einzuschrauben, das eine Gewindebohrung aufweist. Das Innengewinde 60 der Überwurfmutter wird mit dem Gewindeglied 49 verschraubt.

Das Verfahren zum Verschrauben der Bauteile entspricht im wesentlichen demjenigen aus Fig. 9. Gemäß Fig. 11b wird die Überwurfmutter 48 zur Vormontage zunächst in Richtung des Pfeiles 51 auf das Gewindeglied 49 aufgeschraubt, wobei der Anschlag 53 des Gewindeglieds 49 in den gewindefreien Innenabschnitt 14 der Überwurfmutter 48 einragt und an eine Stirnseite des Innengewindes anschlägt. Zur Fertigmontage gemäß Fig. 11c, 11d wird die Überwurfmutter 48 und das Gewindeglied 49 in Richtung des Pfeiles 52 verschoben, bis das Außengewinde 62 der Überwurfmutter 48 am Gewinde der Gewindebohrung des zweiten Gewindeglieds 50 zu greifen beginnt. Daraufhin wird gemäß Fig. 11d die Überwurfmutter 48 in die Gewindebohrung des zweiten Gewindeglieds 50 eingedreht, bis die spitz zulaufende Stirnseite des ersten Gewindeglieds mit Kontakt in einer komplementär geformten Ausnehmung des zweiten Gewindeglieds anliegt. Während des Einschraubens der Überwurfmutter in das zweite Gewindeglied 50 legt das erste Gewindeglied 49 die axiale Stellbewegung 1 zurück.

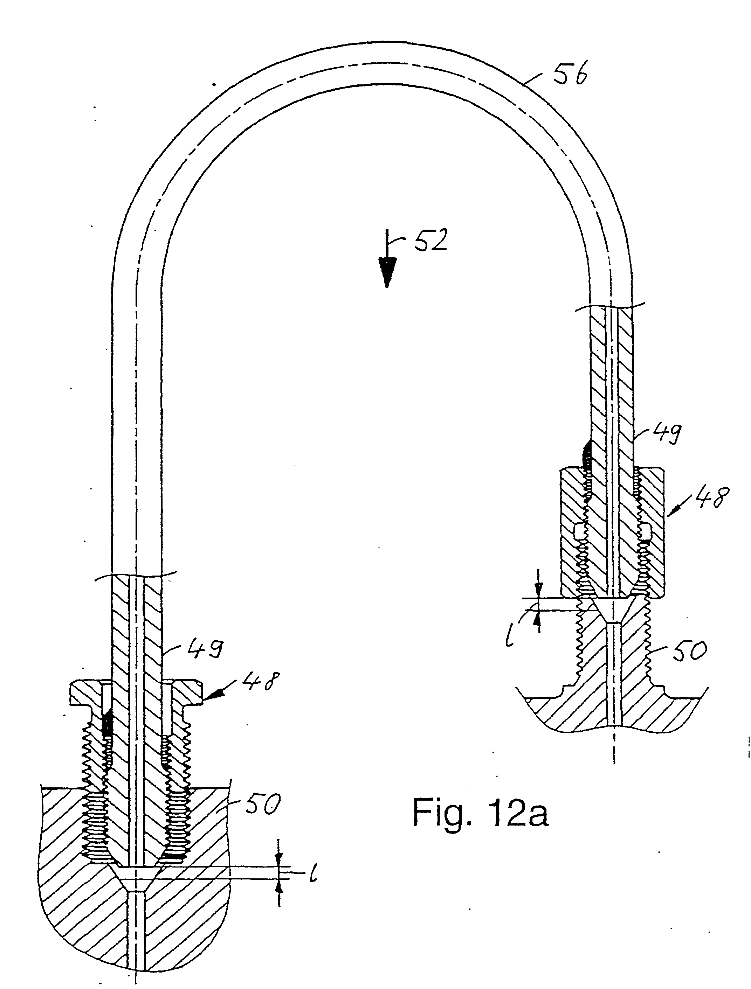

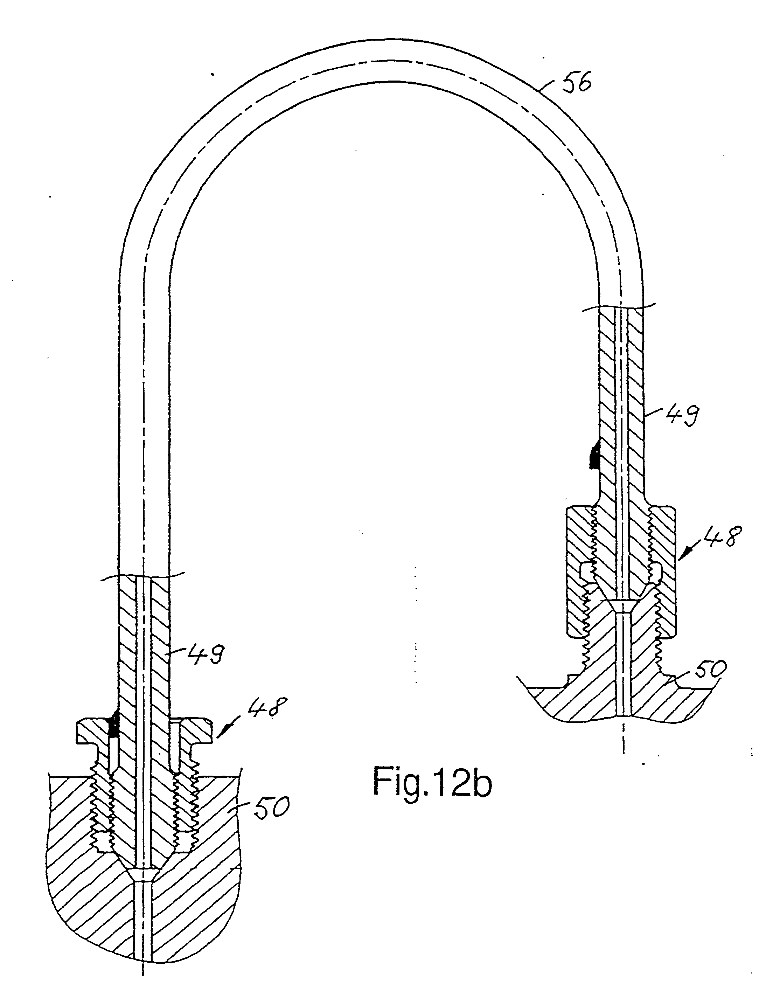

Fig. 12a, 12b zeigt eine Ausführung am Beispiel einer Einspritzleitung. Die Einspritzleitung 56 ist etwa U-förmig ausgebildet und weist an beiden axialen Endbereichen jeweils ein Gewindeglied 49 auf. An jedem Gewindeglied 49 ist eine Überwurfmutter 48 vormontiert, wobei in der linken Bildhälfte der Fig. 12a, 12b die Überwurfmutter 48 mit einem Innengewinde und einem Außengewinde versehen ist und die Überwurfmutter gemäß der rechten Bildhälfte zwei Innengewinde aufweist. Der Anziehvorgang erfolgt für beide Überwurfmuttern in Richtung des Pfeiles 52, wobei die Überwurfmuttern zunächst an das Gewinde des zweiten Gewindeglieds 50 angesetzt werden. Die kegelig zulaufende Stirnseite jedes Gewindeglieds 49 liegt mit axialem Abstand l zur trichterförmigen Ausnehmung im zweiten Gewindeglied 50.

Die Überwurfmuttern werden gemäß Fig. 12 b fest angezogen, so daß eine dichte Verbindung zwischen den Gewindegliedern 49, 50 gegeben ist und Flüssigkeit durch den Flüssigkeitskanal der Einspritzleitung 56 ohne Verluste geleitet werden kann.

Bei Verwendung mehrerer Überwurfmuttern ist es möglich, verschiedene Gewindesteigungen der einzelnen Gewindeabschnitte vorzusehen; hierdurch kann das Maß des Abstandes l zu Beginn des Anziehvorganges zwischen den einzelnen Gewindegliedern variiert werden oder die Anzahl an Umdrehungen beeinflußt werden, die notwendig ist, um den Abstand l zu überwinden.

## Patentansprüche

1. Verbindungsanordnung, die insbesondere automatisiert montierbar ist, mit einem ersten Bauteil (2), einem zweiten Bauteil (3) und einer Überwurfmutter (48), wobei die Überwurfmutter zwei gleichgängige Gewindeabschnitte (5, 6) unterschiedlicher Durchmesser (d1, d2) aufweist,
**dadurch gekennzeichnet, daß**
a) die Gewindeabschnitte (5, 6) unterschiedliche Steigungen (s, S) aufweisen,
b) die Gewindeabschnitte (5,6) unmittelbar mit jeweils einem Bauteil (2, 3) verschraubt sind,
c) daß eine Stirnseite des ersten Bauteils (2) an dem zweiten Bauteil (3) anliegt.

2. Verbindungsanordnung nach Anspruch 1,
**dadurch gekennzeichnet, daß**
ein erster Gewindeabschnitt (5) der Überwurfmutter (48) als Innengewinde (60) sich maximal etwa über die halbe Länge der Überwurfmutter (48) erstreckt und daß sich an das Innengewinde (60) ein gewindefreier Innenabschnitt (14) anschließt.

3. Verbindungsanordnung nach Anspruch 2,
**dadurch gekennzeichnet, daß**
der zweite Gewindeabschnitt (6) als weiteres Innengewinde (61) sich an den gewindefreien Innenabschnitt (14) anschließt.

4. Verbindungsanordnung nach Anspruch 2,
**dadurch gekennzeichnet, daß**
der zweite Gewindeabschnitt (6) als Außengewinde (62) auf der Außenseite (57) der Überwurfmutter (48) angeordnet ist.

5. Verbindungsanordnung nach Anspruch 4,
**dadurch gekennzeichnet, daß**
auf der Außenseite (57) im Anschluß an das Außengewinde (62) ein Mutternkopf (58) vorgesehen ist, der vorzugsweise einen größeren Durchmesser als das Außengewinde (62) aufweist.

6. Verbindungsanordnung nach Anspruch 5, **dadurch gekennzeichnet,**
**daß** das Innengewinde (60) und das Außengewinde (62) sich bis zur gleichen Stirnseite (59) der Überwurfmutter (48) erstrecken.

7. Verbindungsanordnung nach einem der Ansprüche 4 bis 6,
**dadurch gekennzeichnet, daß**
das Außengewinde (62) eine größere Steigung aufweist als das Innengewinde (60).

8. Verbindungsanordnung nach einem der vorhergehenden Ansprüche,
**dadurch gekennzeichnet, daß**
die Überwurfmutter (48) einen Anschlag (53) aufweist, an dem während der Montage ein Bauteil (2, 3) zur Anlage kommt.

9. Verbindungsanordnung nach Anspruch 5,
**dadurch gekennzeichnet, daß**
am Mutternkopf (58) eine die Winkellage der Überwurfmutter (48) kennzeichnende Markierung angeordnet ist.

10. Verbindungsanordnung nach einem der vorhergehenden Ansprüche,
**dadurch gekennzeichnet, daß**
die Gewindeabschnitte (5, 6) gegenüber dem Ansatz des Montagewerkzeuges ausgerichtete Gewindebeginne (5a, 6a) aufweisen.

11. Verbindungsanordnung nach einem der vorhergehenden Ansprüche,
**dadurch gekennzeichnet, daß**
der Gewindebeginn (5a, 6a) und das Gewindeende (5b, 6b) eines Gewindeabschnittes (5, 6) in einer gemeinsamen Längsebene der Überwurfmutter (48) liegen.

12. Verbindungseinrichtung nach einem der vorhergehenden Ansprüche,
**dadurch gekennzeichnet, daß**
die Bauteile (49, 50) als Teile einer Einspritzleitung ausgebildet sind.

13. Verbindungseinrichtung nach einem der vorhergehenden Ansprüche,
**dadurch gekennzeichnet, daß**
die Stirnseite des Bauteils (2) kegelig ausgebildet ist und die komplementär geformte Ausnehmung im Bauteil (3) eine dichte Verbindung gewährleistet.

## Claims

1. Connection arrangement, in particular one that can be assembled automatically, with a first component (2), a second component (3) and a coupling nut (48), the coupling nut (48) having two sections (5, 6) threaded in the same sense but having different diameters (d1, d2),
**characterised in that**
a) the threaded sections (5, 6) have different pitches,
b) the threaded sections (5, 6) are screwed directly each into one component,
c) an end face of the first component (2) is in contact with the second component (3).

2. Connection arrangement according to Claim 1,
**characterised in that**
a first threaded section (5) of the coupling nut (48) extends with an internal thread (60) along at most about half the length of the coupling nut (48), and the said internal thread (60) is adjacent to an inner section (14) having no thread.

3. Connection arrangement according to Claim 2,
**characterised in that**
the second threaded section (6) is adjacent to the thread-free inner section (14) and forms a further internal thread (61).

4. Connection arrangement according to Claim 2,
**characterised in that**
the second threaded section (6) is arranged on the outside (57) of the coupling nut (48) as an external thread (62).

5. Connection arrangement according to Claim 4,
**characterised in that**
on the outside (57), adjacent to the external thread (62) a head (58) of the nut is provided, whose diameter is preferably larger than that of the external thread (62).

6. Connection arrangement according to Claim 5,
**characterised in that**
The internal thread (60) and the external thread (62) extend as far as the same end face (59) of the coupling nut (48).

7. Connection arrangement according to any of Claims 4 to 6,
**characterised in that**
the pitch of the external thread (62) is larger than that of the internal thread (60).

8. Connection arrangement according to any of the preceding claims,
**characterised in that**
the coupling nut (48) has an abutment (53) against which a component (2, 3) comes in contact during assembly.

9. Connection arrangement according to Claim 5,
**characterised in that**
the head (58) of the coupling nut (48) is provided with markings that indicate the angular position of the coupling nut (48).

10. Connection arrangement according to any of the preceding claims,
**characterised in that**
the threaded sections (5, 6) have thread beginning points (5a, 6a) located opposite the engagement point of the assembly tool.

11. Connection arrangement according to any of the preceding claims,
**characterised in that**
the thread beginnings (5a, 6a) and the thread ends (5b, 6b) of the respective threaded sections (5, 6) are located in a common longitudinal plane of the coupling nut (48).

12. Connection arrangement according to any of the preceding claims,
**characterised in that**
the components (49, 50) are formed as parts of an injection duct.

13. Connection arrangement according to any of the preceding claims,
**characterised in that**
the end face of the component (2) is of conical shape and the complementarily shaped recess in component (3) ensures a leakproof connection.

## Revendications

1. Agencement de liaison, en particulier susceptible d'être monté de façon automatique, comprenant un premier composant (2), un second composant (3) et un écrou-raccord (48), ledit écrou-raccord comprenant deux tronçons à pas de vis (5, 6) de diamètres différents (d1, d2) et de pas de même sens,
**caractérisé en ce que** :
a) les tronçons à pas de vis (5, 6) présentent des pentes de pas différentes (s, S),
b) les tronçons à pas de vis (5, 6) sont vissés directement à un composant respectif (2, 3), et
c) une face frontale du premier composant (2) est appliquée contre le second composant (3).

2. Agencement de liaison selon la revendication 1, **caractérisé en ce qu'**un premier tronçon à pas 10 (5) de l'écrou-raccord (48) s'étend, sous forme de taraudage (60), au maximum approximativement sur la moitié de la longueur de l'écrou-raccord (48), et **en ce qu'**un tronçon intérieur (14) dépourvu de pas de vis fait suite au taraudage (60).

3. Agencement de liaison selon la revendication 2, **caractérisé en ce que** le second tronçon à pas de vis (6) fait suite, sous forme d'un autre taraudage (61), au tronçon intérieur (14) dépourvu de pas de vis.

4. Agencement de liaison selon la revendication 2, **caractérisé en ce que** le second tronçon à pas de vis (6) est agencé, sous forme de filetage (61), sur la face extérieure (57) de l'écrou-raccord (48).

5. Agencement de liaison selon la revendication 4, **caractérisé en ce qu'**il est prévu une tête d'écrou (58), sur la face extérieure (57) et à la suite du filetage (62), ladite tête ayant de préférence un diamètre supérieur à celui du filetage (62).

6. Agencement de liaison selon la revendication 5, **caractérisé en ce que** le taraudage (60) et le filetage (62) s'étendent jusqu'à la même face frontale (59) de l'écrou-raccord (48).

7. Agencement de liaison selon l'une des revendications 4 à 6, **caractérisé en ce que** le filetage (62) présente un pas de pente plus forte que le taraudage (60).

8. Agencement de liaison selon l'une des revendications précédentes, **caractérisé en ce que** l'écrou-raccord (48) comporte une butée (53) contre laquelle vient s'appliquer un composant (2, 3) pendant le montage.

9. Agencement de liaison selon la revendication 5, **caractérisé en ce qu'**il est prévu une marque caractérisant la position angulaire de l'écrou-raccord (48), agencée sur la tête d'écrou (58).

10. Agencement de liaison selon l'une des revendications précédentes, **caractérisé en ce que** les tronçons à pas de vis (5, 6) présentent des amorces de pas de vis (5a, 6a) orientées à l'opposé du talon de l'outil de montage.

11. Agencement de liaison selon l'une des revendications précédentes, **caractérisé en ce que** l'amorce (5a, 6a) et la terminaison (5b, 6b) d'un tronçon à pas de vis (5, 6) sont situées dans un plan longitudinal commun de l'écrou-raccord (48).

12. Agencement de liaison selon l'une des revendications précédentes, **caractérisé en ce que** les composants (49, 50) sont réalisés sous forme de parties d'une conduite injectée.

13. Agencement de liaison selon l'une des revendications précédentes, **caractérisé en ce que** la face frontale du composant (2) est réalisée sous forme conique et l'évidement de forme complémentaire dans le composant (3) garantit une liaison étanche.
